# FASCICULE DE BREVET EUROPEEN

(11) **EP 2 179 538 B1**
(45) Date de publication et mention de la délivrance du brevet: **30.11.2016**
(21) Numéro de dépôt: 08776322.3
(22) Date de dépôt: 01.07.2008
(51) Int. Cl.: G06Q 10/10, H04L 12/58

(54) **PROCÉDÉ DE GESTION D'UN PROCESSUS COLLABORATIF AU MOYEN DE MESSAGES ÉLECTRONIQUES**
VERFAHREN ZUR VERWALTUNG EINES KOLLABORATIVEN PROZESSES MITTELS ELEKTRONISCHER NACHRICHTEN
METHOD OF MANAGING A COLLABORATIVE PROCESS BY MEANS OF ELECTRONIC MESSAGES

(30) Priorité: 03.07.2007 FR 0704793
(43) Date de publication de la demande: 28.04.2010
(73) Titulaire: Calinda Software, 13382 Marseille Cédex 13 (FR)
(72) Inventeur: MERMOD, Alexandre, F-13012 Marseille (FR); BASSOMPIERRE, Sébastien, F-13004 Marseille (FR)
(74) Mandataire: Marchand, André
(86) Numéro de dépôt international: PCT/IB2008/001747
(87) Numéro de publication internationale: WO 2009/004470

(56) Documents cités:
- WO-A-02/41160
- FR-A- 2 863 426
- US-A1- 2005 234 850
- US-A1- 2007 038 777

## Description

La présente invention concerne un procédé de gestion d'un processus collaboratif, comprenant l'envoi de messages électroniques à des utilisateurs membres du processus collaboratif et la réception de messages de réponse émis par des utilisateurs. Un tel procédé est mis en oeuvre sous forme de logiciel exécuté par un ordinateur.

Les logiciels de gestion de processus collaboratifs sont couramment utilisés dans l'industrie et sont généralement appelés des "outils de TCAO" (Travail Collaboratif Assisté par Ordinateur). On connait notamment les logiciels de groupe de travail ou "groupware", les logiciels de gestion de forums de discussion sur Internet, les logiciels de gestion de contenu de site Web ou "wiki" (pages Web modifiables par des visiteurs autorisés), des logiciels d'écriture collaborative de documents, ainsi que les logiciels de "flux de travail" ou "workflow" permettant d'organiser un travail d'équipe autour d'un projet.

Certains logiciels sont prévus pour gérer un processus collaboratif à travers une infrastructure de messagerie spécifique (Microsoft Exchange, Lotus Notes, etc.) qui contraint les utilisateurs à posséder un logiciel de messagerie spécifique. D'autres logiciels sont exclusivement dédiés à la diffusion de messages (listes de diffusion Majordomo, Listserv, Yahoo! etc.) et ne sont pas conçus pour gérer n'importe quel type de processus collaboratif.

La demande de brevet US 2007/0038777 décrit un procédé de gestion d'une conversation par l'intermédiaire de messages électroniques. Le serveur exécutant ce procédé, appelé "serveur de conversation", retransmet à tous les participants d'une conversation les messages émis par les autres participants, de sorte qu'un participant qui veut envoyer un message aux autres participants n'a pas besoin de gérer une liste de destinataires. A cet effet, le serveur attribue une adresse de correspondance spécifique à chaque conversation (adresse e-mail), qui est ensuite utilisée par les membres de la conversation. Cette adresse de conversation permet également au serveur de déterminer à quelle conversation se rapporte un message reçu. Le serveur gère également, pour chaque conversation, une liste de participants dont l'identité est déterminée par leur adresse de messagerie, et gère l'arrivée de nouveaux participants dans la conversation en émettant des notifications.

La présente invention vise un procédé de gestion d'un processus collaboratif qui repose sur un principe similaire de diffusion de messages électroniques mais qui permette également de gérer des états du processus collaboratif. Un procédé tel que décrit par US 2007/0038777 ne gère pas les états d'un processus collaboratif et affiche seulement le contenu des messages échangés afin que les membres de la discussion puissent avoir une vue générale de la conversation. La gestion des états d'un processus nécessite non seulement de mémoriser le contenu des messages (questions, opinions, propositions...) émis par les membres du processus, et des réponses à ces messages, mais également de détecter et de mémoriser les relations existant entre les divers messages.

Une telle gestion nécessite également de contrôler le contenu de chaque message. A cet effet, on utilise des logiciels spécifiques (Microsoft Exchange, Lotus Note) qui assurent la configuration des messages et l'analyse des choix sélectionnés par les utilisateurs (par exemple une prise de rendez-vous sous Microsoft Exchange, offrant à l'utilisateur la possibilité de choisir, à titre de réponse, entre une option "disponible" ou "indisponible" qui lui est présentée). Toutefois, comme indiqué plus haut, la détection des choix effectués par les utilisateurs nécessite un logiciel spécifique installé sur leurs postes de travail (par exemple Microsoft Outlook). Ce logiciel détecte les choix des utilisateurs et envoie une information correspondante à un système central de gestion (par exemple le noyau de Microsoft Exchange).

La présente invention vise un procédé de gestion d'un processus collaboratif qui puisse être mis en oeuvre sans exiger que les utilisateurs disposent d'un logiciel spécifique. Un objectif visé par l'invention est notamment qu'un logiciel de messagerie conventionnel conforme aux standards de l'industrie permette à des personnes de participer à un processus collaboratif.

Subsidiairement, il peut être souhaité de s'assurer qu'une personne qui répond à un message émis dans le cadre d'un processus collaboratif, est bien la personne qui a été initialement sollicitée. En effet, il est envisageable que la personne destinataire d'un message transmette le message à une autre personne qui, bien qu'étant membre du processus, n'est pas le destinataire initial du message. A cet effet, une simple vérification de l'adresse de messagerie de la personne émettant la réponse n'est pas suffisante : cette personne peut être membre du processus mais ne pas être la personne a qui le message initial a été envoyé.

Le document US 2007/0038777 décrit un processus collaboratif dans lequel des adresses de réponse sont insérées de manière conventionnelle dans des en-têtes ("header") de messages. Le document WO 02/41160 décrit un dispositif appelé "générateur de liens" qui insère à la volée, dans des messages, des liens de réponse de type OUI/NON, dont l'activation communique des réponses correspondantes à un serveur de messagerie. Le document US 2005/0234850 décrit un serveur de messagerie qui génère des messages en y insérant des identifiants permettant d'identifier un processus ou des utilisateurs.

Ainsi, de façon générale, la présente invention vise à perfectionner les procédés de conversation par messagerie électronique pour gérer des processus collaboratifs nécessitant une analyse du contenu des messages émis par les membres des processus.

A cet effet, la présente invention repose tout d'abord sur l'idée de transférer à des utilisateurs d'un processus collaboratif des messages envoyés par d'autres membres du processus en y insérant des "liens de choix de réponse" qui sont générateurs de messages de réponse. De tels liens sont représentatifs des choix de réponse que le système propose aux membres du processus. Un processus collaboratif organisé est ainsi généré, comprenant des "contributions" émises par des utilisateurs et des réponses à ces contributions, formant elles-mêmes de nouvelles contributions qui sont organisées selon des choix de réponse prédéterminés et matérialisés par les liens insérés dans les contributions au moment où celles-ci sont transmises aux utilisateurs. Ces liens de réponse sont de type standard et sont compatibles avec la plupart des logiciels de messagerie, chaque lien représentant une réponse possible au message transféré. Il s'agit par exemple de lien du type "mailto:" exécutables par la plupart des ordinateurs pourvus d'un logiciel de messagerie.

La présente invention se fonde également sur l'idée de configurer les liens de réponse en y incorporant un identifiant du choix de réponse, pouvant comprendre des informations sur la nature ou le type de la réponse, des informations sur le contexte du message au sein du processus collaboratif, afin que les messages générés par les liens puissent être analysés et interprétés par un serveur de processus collaboratif.

Plus particulièrement la présente invention prévoit un procédé de gestion d'un processus collaboratif au moyen d'un système informatique, comprenant l'envoi de messages électroniques à des utilisateurs membres du processus collaboratif et la réception de messages de réponse émis par des utilisateurs, le procédé comprenant les étapes consistant à recevoir un premier message d'un premier utilisateur, générer un second message, insérer dans le second message une information prélevée dans le premier message, insérer dans le second message, en relation avec tout ou partie de l'information prélevée dans le premier message, au moins un lien de sélection d'un choix de réponse au message, insérer dans le lien une adresse de réponse et au moins un premier identifiant pour identifier un choix de réponse correspondant au lien et à l'information prélevée, et envoyer le second message à au moins un second utilisateur, le lien étant configuré pour générer directement un message de réponse contenant le premier identifiant lorsqu'il est sélectionné par un utilisateur ayant reçu le message.

Selon un mode de réalisation, le procédé comprend l'étape consistant à insérer dans le lien un second identifiant prévu pour identifier le second utilisateur en tant que destinataire du second message, le lien étant configuré pour générer directement un message de réponse contenant le premier et le second identifiants lorsqu'il est sélectionné par le second utilisateur.

Selon un mode de réalisation, le procédé comprend une étape consistant à configurer le lien de manière que le premier et le second identifiants se trouvent placés dans l'une des parties suivantes du message de réponse pouvant être généré par le lien : un champ objet du message ; un corps du message ; un champ d'en-tête du message.

Selon un mode de réalisation, le procédé comprend une étape consistant à crypter au moins le second identifiant avant de l'insérer dans le lien.

Selon un mode de réalisation, le procédé comprend une étape de formation du premier identifiant qui comprend une étape consistant à inclure dans le premier identifiant un identifiant prévu pour identifier un état du processus collaboratif dans lequel s'inscrit la génération du second message.

Selon un mode de réalisation, l'étape de formation du premier identifiant comprend également une étape consistant à inclure dans le premier identifiant un identifiant prévu pour caractériser un type ou une nature du choix de réponse correspondant au lien.

Selon un mode de réalisation, le procédé comprend une étape consistant à insérer également dans le lien un indicateur prévu pour indiquer un taux d'adhésion ou d'approbation relativement à l'information prélevée dans le premier message..

Selon un mode de réalisation, le procédé comprend une étape consistant à insérer également dans le lien un identifiant du langage du processus collaboratif dans lequel s'inscrit la génération du second message.

Selon un mode de réalisation, le procédé comprend une étape consistant à mémoriser dans une table de correspondance une relation entre le premier identifiant et un état du processus collaboratif dans le contexte duquel le second message est généré.

Selon un mode de réalisation, le procédé comprend une étape consistant à mémoriser dans une table de correspondance une relation entre le premier identifiant et l'identité du destinataire du second message.

Selon un mode de réalisation, le procédé comprend les étapes consistant à recevoir un message de réponse généré par le lien, extraire le premier identifiant du message de réponse, extraire du message de réponse une nouvelle information écrite par l'utilisateur ayant envoyé le message de réponse, attribuer à la nouvelle information extraite un ou plusieurs identifiants et mémoriser la nouvelle information et le ou les identifiants associés à l'information.

Selon un mode de réalisation, le procédé comprend les étapes consistant à recevoir un message de réponse généré par le lien, extraire du message de réponse une nouvelle information écrite par l'utilisateur ayant envoyé le message de réponse, rechercher un symbole séparateur au sein de la nouvelle information, morceler la nouvelle information en plusieurs aspects, grâce au symbole séparateur, attribuer un identifiant à chaque aspect, et mémoriser les aspects ainsi que l'identifiant associé à chaque aspect.

Selon un mode de réalisation, le procédé comprend les étapes consistant à générer un troisième message, insérer dans le troisième message les aspects de l'information prélevée dans le message de réponse, insérer dans le troisième message, pour chaque aspect de la nouvelle information, au moins un lien de sélection d'un choix de réponse au message, insérer dans chaque lien une adresse de réponse et au moins l'identifiant de l'aspect correspondant au lien, et envoyer le troisième message à au moins un utilisateur du processus collaboratif.

Selon un mode de réalisation, le procédé comprend les étapes consistant à recevoir un message de réponse généré par le lien, extraire le second identifiant du message de réponse, identifier le destinataire du message initial grâce au second identifiant, vérifier qu'il existe une concordance entre l'adresse émettrice du message de réponse et le destinataire du message initial, et, dans la négative, engager une action conduisant à l'acceptation ou au rejet de l'adresse émettrice du message de réponse en tant que membre du processus collaboratif.

Selon un mode de réalisation, le processus collaboratif est une conversation ou un vote, et le procédé comprend une étape consistant à insérer dans des messages envoyés à des utilisateurs plusieurs liens générateurs de messages de réponse permettant aux utilisateurs d'exprimer des points de vue ou des réponses à des questions.

Selon un mode de réalisation, le procédé comprend les étapes consistant à insérer dans des messages envoyés à des utilisateurs des liens permettant aux utilisateurs d'exprimer un niveau d'adhésion à des points de vue exprimés par d'autres utilisateurs sans exprimer eux-mêmes un point de vue, et - insérer dans chaque lien un paramètre représentatif d'un niveau d'adhésion.

Selon un mode de réalisation, le procédé comprend les étapes consistant à recevoir le premier message au moyen d'un logiciel de messagerie, sélectionner le lien pour que le logiciel de messagerie génère directement un message de réponse contenant le premier identifiant, et envoyer le message.

Selon un mode de réalisation, l'invention concerne également un système informatique de gestion d'un processus collaboratif, configuré pour mettre en oeuvre le procédé décrit ci-dessus, le système informatique comprenant un gestionnaire de message configuré pour générer et envoyer à des utilisateurs membres du processus collaboratif des messages électroniques contenant des liens générateur de messages de réponse incluant au moins le premier identifiant.

Selon un mode de réalisation, le système informatique est également configuré pour recevoir un message électronique contenant une pièce jointe, enregistrer la pièce jointe, envoyer à des utilisateurs membres du processus collaboratif un message contenant un lien pointant vers la pièce jointe enregistrée.

Selon un mode de réalisation, le gestionnaire de message est configuré pour insérer dans des messages des liens générateurs de messages compatibles avec une infrastructure de messagerie électronique basée sur des standards de messagerie électronique, de messagerie instantanée ou de messagerie sur téléphone mobile.

Des exemples de mise en oeuvre du procédé de gestion de processus collaboratif selon l'invention seront décrits dans ce qui suit à titre non limitatif, en relation avec les figures jointes parmi lesquelles :
- la figure 1 représente schématiquement un exemple de système informatique au sein duquel le procédé selon l'invention est mis en oeuvre,
- la figure 2 illustre le fonctionnement général du système informatique en relation avec le procédé selon l'invention,
- les figures 3A à 3E représentent des messages électroniques générés dans le cadre d'un processus collaboratif de type conversation mis en oeuvre conformément au procédé selon l'invention,
- la figure 4A est un organigramme décrivant une boucle de génération de messages comprenant des liens de réponse,
- la figure 4B est un organigramme décrivant une boucle de configuration des liens de réponse,
- la figure 5 est un organigramme décrivant des étapes de réception de messages,
- la figure 6 représente un message généré suivant une variante de mise en oeuvre du procédé selon l'invention, et
- les figures 7A à 7E illustrent un autre exemple de mise en oeuvre du procédé selon l'invention, pour gérer un processus collaboratif visant le choix d'une date de réunion.

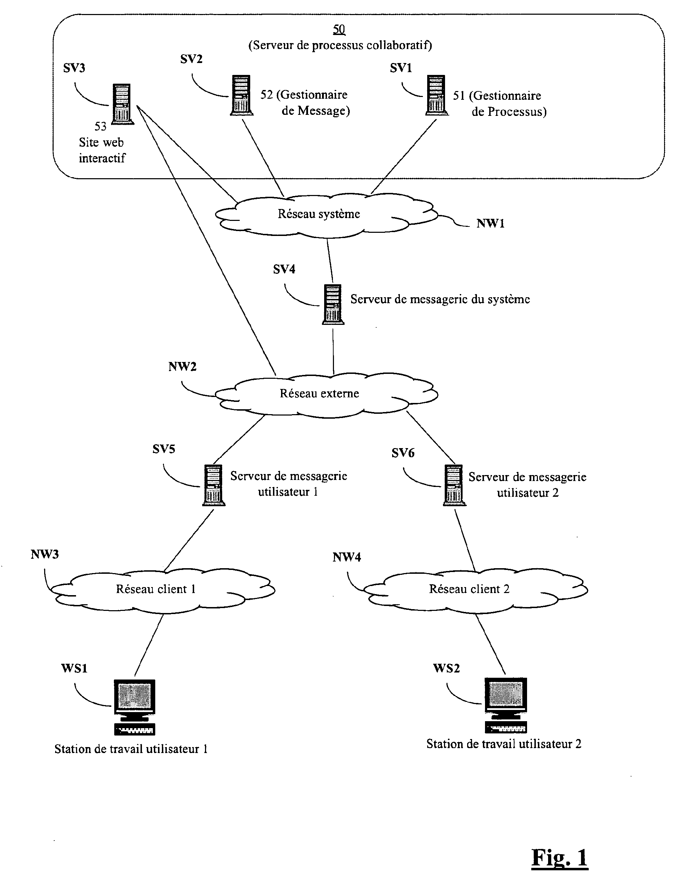

La figure 1 représente un système informatique au sein duquel le procédé selon l'invention est mis en oeuvre. Le système comprend un serveur de processus collaboratif 50 exécutant le procédé selon l'invention, et des utilisateurs, ici deux utilisateurs représentés sous forme de stations de travail WS1, WS2. Le serveur 50 comporte deux organes qui coopèrent pour gérer le processus collaboratif, ici un Gestionnaire de Processus collaboratif 51 et un Gestionnaire de Message 52. Chaque organe 51, 52 est réalisé sous forme de logiciel exécuté par un ordinateur. Le Gestionnaire de Processus 51 est ici exécuté par un premier serveur SV1 et le Gestionnaire de Processus est ici exécuté par un second serveur SV2. Les deux organes 51, 52 pourraient toutefois être exécutés sur le même serveur selon la puissance de traitement recherchée (qui est fonction du nombre d'utilisateurs susceptibles de participer en même temps à des processus collaboratifs).

Le serveur 50 et les utilisateurs WS1, WS2 sont reliés de façon classique par l'intermédiaire d'un réseau externe NW2 (par exemple le réseau Internet) et peuvent échanger des messages électroniques. A cet effet les serveurs SV1, SV2 sont par exemple reliés à un serveur de messagerie SV4 par l'intermédiaire d'un réseau système NW1. L'utilisateur WS1 est par exemple relié à un serveur de messagerie SV5 par l'intermédiaire d'un réseau NW3, et l'utilisateur WS2 est par exemple relié à un serveur de messagerie SV6 par l'intermédiaire d'un réseau NW4. Les serveurs de messagerie SV4, SV5, SV6 sont reliés au réseau externe NW2. Ces divers serveurs peuvent fonctionner sous tout type de plateforme connue, notamment Windows^{®}, Linux^{®}, Unix^{®}, etc.

Optionnellement, le serveur 50 peut inclure un site web interactif 53 auquel les utilisateurs peuvent se connecter pour visualiser une représentation graphique d'un processus collaboratif ou pour générer de nouveaux processus, gérer des abonnements, déclarer de nouveaux utilisateurs, etc. Le site web 53 est ici hébergé par un serveur SV3 qui est relié au réseau externe NW2 et peut optionnellement être relié aux serveurs SV1, SV2 par l'intermédiaire du réseau système NW1.

La gestion des états d'un processus collaboratif au moyen d'un système informatique tel que celui représenté en figure 1 suppose que l'on définisse des paramètres de contexte (ou paramètres contextuels) permettant de caractériser les états du processus, à partir d'un modèle conceptuel du processus. Un modèle fonctionnel du processus collaboratif est également nécessaire pour définir les aspects fonctionnels du processus, c'est-à-dire définir comment les informations sont échangées entre les membres d'un processus et comment elles sont identifiées dans leur nature ou dans leur type. Un modèle de codification du modèle conceptuel et du modèle fonctionnel est également nécessaire, à savoir un ensemble de codes ou d'identifiants permettant de référencer les éléments essentiels du modèle conceptuel et du modèle fonctionnel.

Les exemples de mise en oeuvre du procédé selon l'invention qui seront décrits dans ce qui suit sont liés à un modèle conceptuel, un modèle fonctionnel et un modèle de codification déterminés du processus collaboratif. Afin de mieux comprendre ces exemples, on décrira préalablement, à titre non limitatif, les modèles conceptuel, fonctionnel et de codification sur lesquels sont fondés ces exemples.

### Exemple de modèle conceptuel

Le modèle conceptuel suivant comprend un certain nombre de définitions :
- une "contribution" est une information émise par un utilisateur membre d'un processus collaboratif (par exemple une question posée, un avis sur un sujet, une proposition, une réponse à une question, etc.) en réponse à une contribution précédente émise par un autre utilisateur, la contribution étant elle-même susceptible de réponse de la part des autres utilisateurs ;
- le processus collaboratif comprend ainsi un enchainement de contributions, formant une sorte d'arbre, et commence par une première contribution ou contribution initiatrice du processus ;
- une contribution comprend un ou plusieurs "aspects" ; en effet un utilisateur peut souhaiter répondre à une contribution en soulevant plusieurs points susceptibles chacun d'une réponse de la part des autres utilisateurs, chaque point formant un aspect de la contribution ;
- une réponse à une contribution peut comprendre l'expression d'un niveau d'adhésion ;
- une réponse à une contribution peut également ne comprendre que l'expression d'un niveau d'adhésion et être dépourvue d'aspect ; dans ce cas elle n'est pas considérée comme une contribution mais le niveau d'adhésion qu'elle exprime peut être mémorisé en tant que paramètre du processus ;
- une réponse à une contribution peut donc comprendre un ou plusieurs aspects et un niveau d'adhésion, elle forme alors elle-même une nouvelle contribution, ou ne comprendre qu'un niveau d'adhésion ;
- le terme "sollicitation" peut être utilisé pour désigner le fait qu'une contribution émise par un membre du processus est transmise à un autre membre du processus, l'invitant ainsi à répondre à la sollicitation et à émettre une nouvelle contribution.

### Exemple de modèle fonctionnel

A partir du modèle conceptuel ci-dessus, on définit ici un modèle fonctionnel adapté à une gestion d'un processus collaboratif de type "intelligence collective" et se développant par l'intermédiaire de messages électroniques :
- le serveur 50 transfère aux utilisateurs, sous forme de messages électroniques, les contributions émises par les autres utilisateurs, chaque message électronique transmis formant ainsi un message de sollicitation ;
- un utilisateur peut répondre à un message de sollicitation en envoyant au serveur 50 un message de réponse comprenant un ou plusieurs aspects et formant une contribution, en choisissant une option de réponse parmi plusieurs options qui lui sont proposées. On choisit ici, à titre d'exemple, de proposer quatre options de réponse à l'utilisateur : "confirmer" (approuver), "infirmer" (désapprouver), "répondre", "proproser";
- optionnellement, un utilisateur peut répondre à un message de sollicitation en choisissant l'une des options susmentionnées tout en exprimant un niveau d'adhésion qui est par exemple matérialisé par un pourcentage compris entre 0 et 100% ;
- afin de permettre au serveur 50 de distinguer les divers aspects d'une contribution, il est demandé aux utilisateurs d'utiliser dans les messages de réponse un symbole séparateur prédéterminé pour séparer les aspects de la contribution, par exemple un saut de paragraphe (ligne vide), tout autre symbole séparateur pouvant être prévu ;
- si une contribution comporte plusieurs aspects qui sont répercutés à un utilisateur dans un message de sollicitation, un utilisateur peut répondre à chaque aspect présent dans le message de sollicitation en choisissant l'une des options précitées ("confirmer", "infirmier" , "répondre ", "proposer") et optionnellement, tout en exprimant un niveau d'adhésion compris entre 0 et 100% ;
- un utilisateur peut également répondre à un message de sollicitation en envoyant au serveur 50 un message ne comprenant aucun aspect (i.e. ne comprenant aucune opinion, réponse, proposition, etc.) et comprenant seulement un niveau d'adhésion, en choisissant l'une des possibilités suivantes : "en désaccord", "plutôt en désaccord", "plutôt d'accord", "d'accord". Dans ce cas des niveaux d'adhésion prédéfinis, par exemple 0%, 33%, 66% et 100%, sont respectivement associés à chacun de ces choix. Le message de réponse ne comprenant qu'un niveau d'adhésion n'est pas considéré comme une contribution, conformément au modèle conceptuel.

### Exemple de modèle de codification

A partir du modèle fonctionnel ci-dessus, les états du processus collaboratif peuvent être gérés au moyen de paramètres de contexte. On définit par exemple, comme paramètres de contexte, les identifiants suivants :
- un identifiant UID ("identifiant d'utilisateur") formant un numéro attribué à un utilisateur ;
- un identifiant CID ("identifiant de contribution") formant un numéro attribué à une contribution (soit un numéro de message reçu par le serveur si ce message contient un ou plusieurs aspects et forme donc une contribution) ;
- un identifiant AID ("identifiant d'aspect") formant un numéro d'aspect attribué à chaque aspect présent au sein d'une contribution (chaque aspect pouvant être distingué grâce au symbole séparateur) ;
- éventuellement un identifiant de langue LG indiquant la langue dans laquelle le ou les aspects d'une contribution sont formulés ;

Il sera noté que l'identifiant UID est, dans ce qui suit, un code associé à l'adresse de messagerie de l'utilisateur et différent de celle-ci. Toutefois l'adresse de messagerie de l'utilisateur pourrait également être utilisée comme identifiant UID, la seule limitation que ce mode de réalisation implique étant de ne pas permettre que plusieurs utilisateurs partagent la même adresse de messagerie.

En sus des paramètres contextuels, des paramètres d'action peuvent être définis, pour caractériser le type ou la nature d'un choix effectué par un utilisateur. On définit par exemple les paramètres suivants :
- un identifiant "TYPE" définissant le type d'une réponse à un message de sollicitation, cet identifiant étant égal à 0 lorsque l'utilisateur émet un message de réponse contenant un ou plusieurs aspects (contribution), et égal à 1 lorsque l'utilisateur envoie un message de réponse exprimant seulement un niveau d'adhésion ;
- un identifiant "CNATURE" définissant la nature d'une contribution, cet identifiant étant égal à 0 pour une réponse de type "confirmation" (approbation), à 1 pour une réponse de type "infirmation" (désapprobation), à 2 pour une réponse de type "réponse" et à 3 pour une réponse de type "proposition" ;

D'autres identifiants et d'autres modèles fonctionnels peuvent bien entendu être définis selon le type de processus collaboratif à gérer, par exemple un identifiant "DISPO" indiquant une disponibilité s'il est égal à 1 ou une indisponibilité s'il est égal à 0 en réponse à une demande de réunion à une date déterminée.

Par ailleurs, les identifiants TYPE et CNATURE sont eux-mêmes susceptibles de diverses variantes au sein du modèle fonctionnel. En effet rien n'oblige l'homme de l'art à choisir quatre valeurs possibles pour qualifier la nature d'une contribution, les choix effectués ici étant seulement le fruit de travaux d'optimisation du modèle en vue de certaines applications.

### Fonctionnement général du système

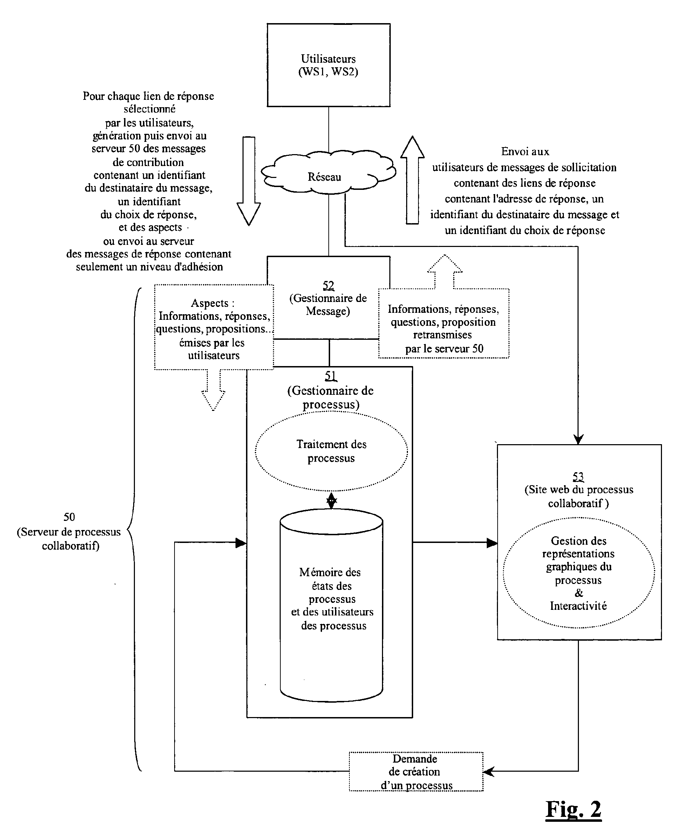

La figure 2 est un schéma fonctionnel du système informatique de la figure 1 illustrant son fonctionnement général en relation avec les modèles conceptuel et fonctionnel décrits ci-dessus.

Le Gestionnaire de Processus 51 assure le traitement des processus collaboratifs et comprend une mémoire des états des processus et des utilisateurs des processus. La mémoire des états des processus est structurée sous forme de base de données. Chaque processus géré par le Gestionnaire de Processus comprend une suite d'états et de transitions faisant évoluer ces états vers une issue souhaitée par un groupe d'utilisateurs membres du processus. La mémoire des états des processus est une mémoire de masse du serveur SV1, comprenant par exemple un ou plusieurs disques durs, dans laquelle sont enregistrés les paramètres de contexte et les paramètres d'action.

Un utilisateur (abonné ou non, selon le mode d'exploitation commerciale retenu) peut ouvrir un processus collaboratif en se connectant au site web 53 et en désignant les membres du processus par leurs adresses de messagerie respectives (ces membres étant eux-mêmes abonnés ou non selon le mode de gestion commerciale retenu) et en indiquant un thème et des points à traiter formant des aspects de la première contribution du processus (contribution initiatrice du processus).

D'autres modes d'initialisation de processus peuvent être prévus, notamment l'envoi au serveur 50 d'un message contenant, dans son corps, un premier champ contenant des aspects de la première contribution et un second champ contenant une liste de membres du processus, le serveur devant être configuré pour interpréter un tel message d'initialisation de processus.

Un identifiant UID est associé par le serveur 50 à chaque utilisateur désigné et une liste de membres du processus collaboratif est ainsi définie au commencement du processus. Cette liste peut s'enrichir de nouveaux utilisateurs au fur et à mesure que le processus évolue, d'une manière décrite plus loin.

L'utilisateur initiateur peut par exemple décider d'ouvrir un processus collaboratif rattaché à un thème "R&D", intitulé "Faisons le point sur l'état d'avancement du projet X", et comprenant les trois aspects suivants :
- "qu'est-ce qui a été accompli depuis le dernier état d'avancement" ;
- "quel est le plan pour la prochaine période" ;
- "quels sont les obstacles et idées à approfondir".

Ces informations sont communiquées au serveur via le site web (un formulaire à remplir pouvant être prévu à cet effet) ou par message électronique, suivant le mode d'initialisation retenu.

On supposera dans ce qui suit que les messages électroniques utilisés pour gérer le processus collaboratif sont des "e-mails" (mél) mais il sera précisé plus loin que l'invention n'est pas exclusivement dédiée à un système de messagerie par e-mail.

Lorsque l'utilisateur initiateur a défini sa première contribution et a désigné les membres du processus, le serveur 50 attribue un identifiant CID à cette première contribution et attribue un identifiant AID à chacun de ses aspects, l'ensemble étant mémorisé dans la base de données du processus (mémoire des états).

Le serveur 50 envoie ensuite la contribution et ses aspects aux utilisateurs désignés sous forme de messages de sollicitation contenant des "liens de choix de réponse" correspondant chacun à un choix de réponse. Ces liens de choix de réponse seront désignés "liens de réponse" dans le reste de la description dans un souci de simplification du langage. Il s'agit de préférence de liens standards, conformes aux normes internationales et supposés exécutables par tout type de logiciel de messagerie conforme aux standards de l'industrie (SMTP, POP3, IMAP, HTML, MHTML) .

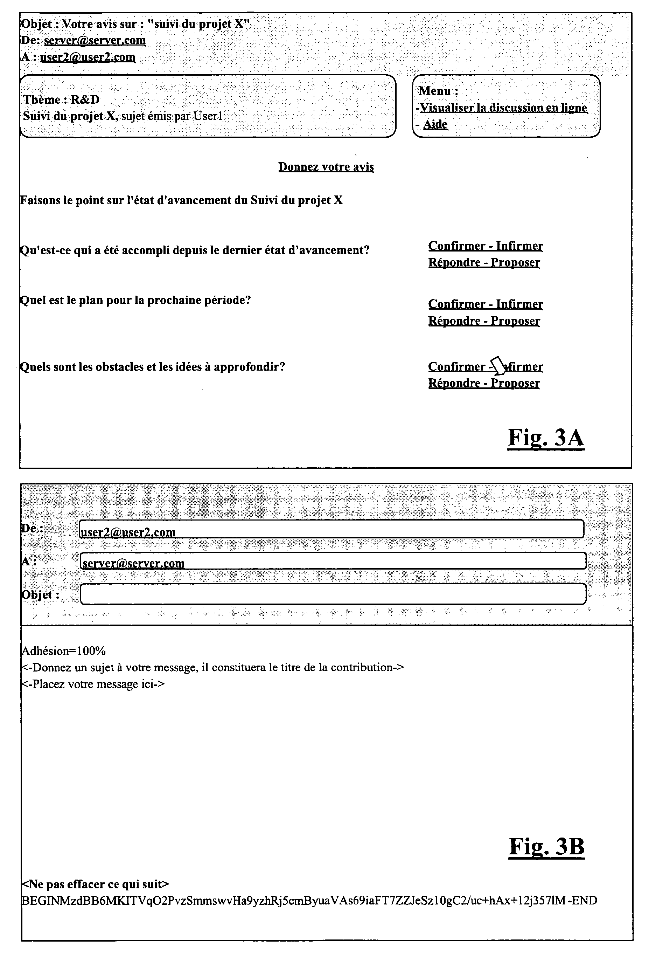

La figure 3A illustre un exemple de message de sollicitation contenant les trois aspects susmentionnés, l'utilisateur initiateur étant ici nommé "user1", le message représenté étant envoyé à un utilisateur "user2 ". Conformément au modèle fonctionnel retenu, chaque aspect de la contribution est accompagné de quatre liens de réponse "confirmer", "infirmer", "répondre" ou "proposer".

S'agissant du premier message de sollicitation du processus, il n'est pas jugé nécessaire d'insérer également dans ce message de sollicitation des liens visant à exprimer un niveau d'adhésion sans exprimer d'opinion, mais de tels liens pourraient être prévus pour permettre à un utilisateur d'indiquer qu'il ne souhaite pas participer au processus.

Optionnellement, le serveur 50 ajoute une indication dans le champ "objet" du message ("Votre avis sur : "suivi du projet X"), et insère également dans le message un menu contenant un lien pointant vers le site web 53 ("visualisez la discussion en ligne"), un lien pointant vers une page d'aide ("Aide"), ainsi que diverses informations ("thème : R&D", "suivi du projet X, sujet émis par User1, etc.).

L'utilisateur "user2" répond au serveur 50 en sélectionnant l'un de ces liens, ce qui provoque la génération d'un message de réponse comprenant une adresse de retour contenue dans le lien. Cette adresse peut être fixe et n'est pas nécessairement attribuée spécifiquement au processus engagé, il s'agit par exemple d'une adresse générale "server@server.com". L'utilisateur peut également renvoyer plusieurs messages de réponse en sélectionnant plusieurs liens, de préférence un lien pour chaque aspect du message de sollicitation.

Un exemple de message de réponse est illustré en figure 3B. On suppose ici que l'utilisateur "user2" a sélectionné le lien "proposer" en regard du troisième aspect de la contribution ("quels sont les obstacles et les idées à approfondir") dans le message représenté en figure 3A.

Le corps du message contient diverses informations, notamment un code en bas du message, précédé de la mention "ne pas effacer ce qui suit". Le message contient également une invitation à répondre ("placez votre message ici") et un niveau d'adhésion qui est défini par défaut comme étant égal à 100% pour une réponse de type "proposer" mais que l'utilisateur peut modifier manuellement.

Le code en bas du message est crypté et sa structure sera décrite plus loin. On peut d'ores et déjà noter que ce code contient les identifiants TYPE et CNATURE du lien que l'utilisateur a sélectionné, l'identifiant CID de la contribution à laquelle le message répond, l'identifiant AID de l'aspect auquel le message répond et optionnellement l'identifiant UID de l'utilisateur ayant reçu le message initial. Le champ du message indiquant l'adresse de l'émetteur contient l'adresse de l'utilisateur "user2" (user2@user2.com) si l'utilisateur qui répond est bien l'utilisateur visé par le message initial.

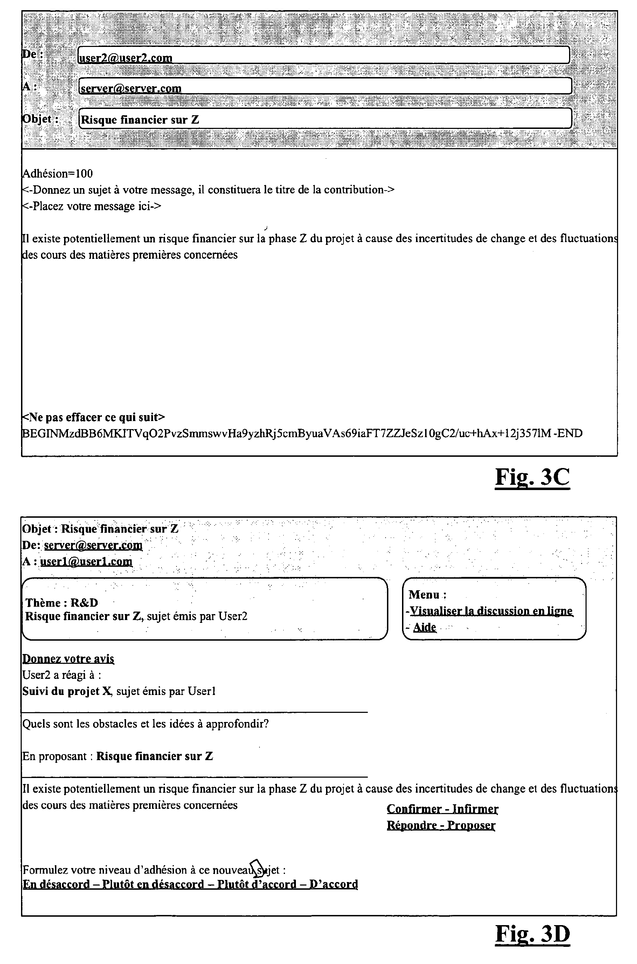

La figure 3C représente le même message après que l'utilisateur a inséré une contribution dans le corps du message. Dans cet exemple, l'utilisateur a soulevé le point suivant "Il existe potentiellement un risque financier sur la phase Z du projet à cause des incertitudes de change et des fluctuations des cours des matières premières concernées". L'utilisateur a également renseigné le champ "objet" du message en indiquant le titre de sa contribution "Risque financier sur Z".

Le message, une fois envoyé, forme donc une nouvelle contribution qui ne comprend ici qu'un seul aspect ("Il existe potentiellement... ")

Lorsque le serveur 50 reçoit un tel message, il lui attribue un identifiant de contribution CID (différent de l'identifiant CID de la contribution à laquelle le message répond) et recherche les aspects dans le corps du message (recherche des sauts de paragraphe), puis attribue à chaque aspect un identifiant AID (ici un seul aspect étant trouvé).

Le serveur 50 mémorise ensuite dans sa base de données, pour cette contribution :
- l'identifiant UID de l'utilisateur ayant répondu (user2),
- l'identifiant CID de la contribution,
- les identifiants TYPE et CNATURE définissant le type et la nature de la contribution,
- le niveau d'adhésion mentionné dans la contribution, et
- le contenu des aspects de la contribution,
- les identifiants respectifs AID des aspects de la contribution (ici un seul aspect étant mémorisé), et
- l'identifiant AID de l'aspect de la contribution précédente au sujet de laquelle la présente contribution s'exprime, ceci permettant de créer des liens, dans la base de données, entre les diverses contributions et leurs divers aspects (lien de cause à effet).

Chaque contribution de ce type émise par chaque utilisateur en réponse au premier message de l'utilisateur initiateur "user1", et contenant un ou plusieurs aspects, est traitée de la même manière et est ensuite renvoyée à chacun des autres utilisateurs sous forme de message de sollicitation. Les réponses renvoyées par les utilisateurs sont elles-mêmes traitées de la même manière, l'ensemble pouvant ainsi former très rapidement un arbre complexe qui est mémorisé et que les utilisateurs peuvent, s'ils le souhaitent, consulter sous diverses formes graphiques en se connectant au site web 53.

A titre d'exemple, la figure 3D illustre un message de sollicitation envoyé par le serveur 50 à l'utilisateur initiateur "user1", ce message contenant la contribution émise par l'utilisateur "user2".

Comme précédemment, et conformément au modèle fonctionnel utilisé ici, l'aspect unique de la contribution de "user2" est accompagné des quatre liens de réponse "confirmer", "infirmer", "répondre" ou "proposer".

S'agissant d'un message contenant une contribution répondant à une précédente contribution, le serveur 50 a également inséré dans le message quatre liens visant l'expression d'un niveau d'adhésion, à savoir : "en désaccord", "plutôt en désaccord", "plutôt d'accord", "d'accord". Conformément au modèle fonctionnel, ces liens contiennent des niveaux d'adhésion prédéfinis de 0%, 33%, 66% et 100%, respectivement.

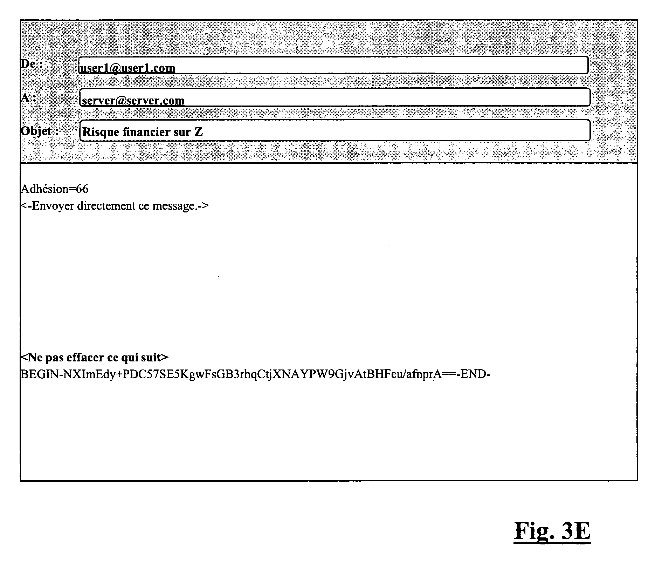

La figure 3E représente le message que l'utilisateur "user1" renvoie au serveur dans l'hypothèse où l'utilisateur a sélectionné le lien "plutôt d'accord" dans le message représenté en figure 3D. Le message généré par le lien mentionne le niveau d'adhésion prédéfini et ne propose pas à l'utilisateur d'insérer des commentaires ou des opinions. En bas du corps du message figure le code crypté qui permet d'identifier le type du message, le contexte de la sollicitation, et optionnellement l'identifiant du destinataire du message initial auquel ce message répond, ici l'identifiant UID de l'utilisateur "user2".

Lorsque le serveur reçoit un tel message, un numéro de contribution n'y est pas associé car le message n'est pas considéré comme une contribution, conformément au modèle fonctionnel retenu ici. Seul le niveau d'adhésion de l'utilisateur "user1" à la contribution émise par l'utilisateur "user2" est mémorisé pour être présenté dans la représentation graphique gérée par le site web 53.

### Exemple de configuration des liens générateurs de messages

Il ressort des exemples qui précèdent que chaque message de sollicitation envoyé par le serveur à un utilisateur contient, pour chaque aspect de la contribution incluse dans le message, un ensemble de liens de réponse incluant chacun :
- l'adresse de réponse (ici "server@server.com"),
- un identifiant du choix de réponse, et
- optionnellement, l'identifiant UID du destinataire du message.

En appliquant le modèle fonctionnel et le modèle de codification décrits ci-dessus, l'identifiant du choix de réponse comprend ici :
- les identifiants TYPE et CNATURE indiquant le type de la nature du choix matérialisé par le lien,
- les identifiants du contexte de la contribution, à savoir les identifiants CID et AID correspondant à la contribution ayant causé la génération du message dans lequel les liens sont insérés,
- éventuellement, l'identifiant LG de la langue de la contribution.

Comme chaque aspect d'une sollicitation peut recevoir ici, par convention, quatre types de réponse (CNATURE égal à 0 pour une réponse de type "confirmation", à 1 pour une réponse de type "infirmation", à 2 pour une réponse de type "réponse" et à 3 pour une réponse de type "proposition") quatre liens de réponse de type 0 (TYPE=0) sont associés à chaque aspect d'un message de sollicitation, à savoir un lien intitulé "confirmer", un lien intitulé "infirmer", un lien intitulé "répondre" et un lien intitulé "proposer".

Par ailleurs, comme chaque utilisateur se voit également offrir ici la possibilité de répondre à un message de sollicitation par un niveau d'adhésion en choisissant l'une des possibilités suivantes : "en désaccord", "plutôt en désaccord", "plutôt d'accord", "d'accord", quatre liens d'expression d'un niveau d'adhésion, indépendants des aspects et intitulés "en désaccord", "plutôt en désaccord", "plutôt d'accord", ou "d'accord" sont également insérés dans un message de sollicitation, à l'exclusion du premier message de sollicitation .

Pour un système de messagerie de type e-mail, un lien de réponse conventionnel est de type "mailto:" et peut être configuré de manière que l'identifiant du destinataire UID et l'identifiant du choix de réponse (TYPE, CNATURE, CID, AID, LG) se retrouve dans l'une des parties suivantes du message généré par le lien :
- dans le champ objet du message,
- dans le corps du message, ou
- dans un champ d'en-tête du message, invisible aux utilisateurs.

Dans des exemples de liens décrits ici, on a choisi de placer l'identifiant du destinataire du message et l'identifiant du choix de réponse dans le corps du message (commande "body"), sous la forme d'un code compact qui peut optionnellement être crypté afin qu'un utilisateur ne puisse pas corrompre les identifiants UID, TYPE, CNATURE, CID, AID, LG que le code comporte.

### Exemple de structure de liens générateurs d'une contribution

Conformément au modèle fonctionnel retenu, le libellé de ces liens est à choisir entre "confirmer", "infirmer", "répondre" ou "proposer".

Le contenu des liens peut être le suivant :
MAILTO:server@sever.com?body= Adhésion= *xxx* %0A<-Donnez un sujet à votre mail, il constituera le titre de la contribution->%0A<-Placez votre message ici->%0A%0A%0A%0A%0A%0A%0A%0A%0A%0A%0A%0A%0A%0A%0A%0A<-Ne pas effacer ce qui suit-> %0A-BEGIN-UID=*xxx*; Type=0; CNAIURE=*x*; CID=*xxx*;AID=xxx; LG=FR-END-

Dans ce lien, "*x*" sont des valeurs numériques ou alphanumériques, "%0A" est un code de saut de paragraphe. Les valeurs "*x*" sont choisies en fonction du libellé du lien. Par exemple le niveau d'adhésion est égal à 0% si le libellé du lien est "infirmer" et est égal à 100% si le libellé du lien est "confirmer". Pour des liens "répondre" et "proposer", le niveau d'adhésion est choisi par défaut égal à 100% et peut être modifié par l'utilisateur puisque le niveau d'adhésion est présenté en clair dans le corps du message.

Les valeurs des identifiants CID et AID sont celles des identifiants de la contribution initiale ayant causé la génération du message contenant le lien et l'aspect auquel le lien permet de répondre. L'identifiant UID est l'identifiant du destinataire du message comprenant le lien (et non l'identifiant de l'utilisateur à l'origine de l'aspect auquel le lien permet de répondre, ce dernier étant enregistré dans la base de données). La valeur x de l'identifiant CNATURE, comprise entre 0 et 3, indique si le libellé du lien est "confirmer", "infirmer", "répondre" et "proproser". Enfin, l'identifiant LG précise la langue de la contribution (ici le français).

Le code compact inséré dans le lien peut être préalablement crypté, par exemple au moyen d'un algorithme DES. Le lien peut alors avoir l'apparence suivante :
MAILTO:server@sever.com?body= Adhésion= *xxx* %0A<-Donnez un sujet à votre mail, il constituera le titre de la contribution->%0A<-Placez votre message ici->%0A%0A%0A%0A%0A%0A%0A%0A%0A%0A%0A%0A%0A%0A%0A%0A<-Ne pas effacer ce qui suit-> %0A-BEGIN-MzdBB6MTTVqO2PvzSmmswvHa9yzhRj5cmByuaVAs69iaFT7ZZJeSz10gC2/uc+hAx+12j 3571M -END-

Les divers identifiants insérés dans les liens générateurs de messages permettent de retrouver sans ambigüité le contexte dans lequel se situe le message de réponse généré au moyen de ce lien, non seulement au sein du processus collaboratif concerné mais également au sein de plusieurs processus collaboratifs susceptibles d'être gérés simultanément par le serveur. Un identifiant de processus pourrait également être prévu mais une génération incrémentielle des identifiants CID, de manière que chaque contribution se voit attribuer un identifiant unique, permet de retrouver sans ambigüité la contribution dans la base de données du serveur et de savoir à quel processus collaboratif elle appartient. De même, une génération incrémentielle des identifiants d'aspect AID faite de manière que chaque aspect se voit attribuer un identifiant unique, permettrait de savoir à quel processus l'aspect AID est rattaché, voire à quelle contribution CID l'aspect est rattaché. Dans ce cas, l'identifiant CID pourrait être supprimé et seul l'identifiant AID être inséré dans les liens.

Dans une variante de réalisation, l'identifiant UID de l'utilisateur destinataire du message pourrait également être supprimé. Comme cela sera vu par la suite, cet identifiant permet de vérifier que l'adresse de l'émetteur du message de réponse généré par le lien est bien celle de l'utilisateur destinataire du message initial mais cette vérification pourrait ne pas être faite. Les identifiants UID, AID, CID pourraient également être remplacés par un identifiant unique et par une table de correspondance dans la base de données du serveur donnant les valeurs de ces identifiants à partir de la valeur de l'identifiant unique. Ainsi, l'insertion dans les liens de plusieurs identifiants ayant chacun une fonction spécifique permet seulement de simplifier la structure de base de données du serveur en limitant le nombre de tables de correspondance.

### Exemple de structure de liens visant seulement l'expression d'un niveau d'adhésion

Comme cela a été vu dans le message représenté sur la figure 3D, il s'agit ici de liens indépendant des aspects d'une contribution et rattachés à la contribution considérée dans son ensemble. Le libellé apparent du lien est ici à choisir entre "en désaccord", "plutôt en désaccord", "plutôt d'accord", ou "d'accord". Le contenu du lien peut être le suivant :
MAILTO:server@sever.com?body= Adhésion= xxx %0A<-Envoyez directement ce message->%0A%0A%0A%0A%0A%0A%0A%0A%0A%0A%0A%0A%0A%0A<-Ne pas effacer ce qui suit-> %0A-BEGIN-UID=*xxx*; TYPE=1; CID=*xxx*; LG=FR-END-

Comme précédemment, "*x*" sont des valeurs numériques, "%0A" est un code de saut de paragraphe. Ici, le code compact inséré dans le lien ne comprend pas l'identifiant CNATURE, s'agissant d'un lien visant l'expression d'un niveau d'adhésion. De même l'identifiant AID est supprimé du code, car le lien est indépendant des aspects de la contribution initiale et est uniquement rattaché à la contribution prise dans son ensemble.

Les valeurs "*x*" du niveau d'adhésion sont choisies en fonction du libellé du lien. Par exemple, conformément au modèle fonctionnel retenu, le niveau d'adhésion est égal à 0% si le libellé du lien est "en désaccord", égal à 33% si le libellé du lien est "plutôt en désaccord", égal à 66% si le libellé du lien est "plutôt d'accord" et égal à 100% si le libellé du lien est "d'accord".

Comme précédemment, l'identifiant CID est celui de la contribution initiale ayant causé la génération du message contenant le lien. Egalement, le code compact inséré dans le lien peut être crypté afin de ne pas apparaître en clair.

### Exemple d'organigrammes de génération et de traitement de messages

### Génération de messages

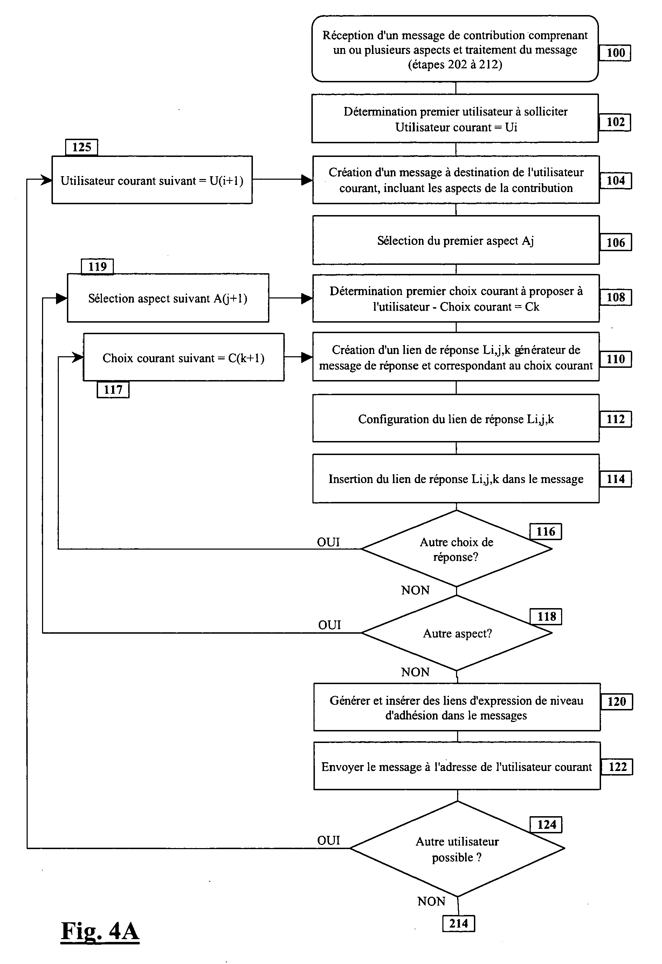

L'organigramme représenté sur la figure 4A illustre un exemple de mise en oeuvre d'une boucle de génération de messages de sollicitation, après réception d'une contribution.

Les étapes représentées sur l'organigramme impliquent une coopération entre le Gestionnaire de Processus 51 et le Gestionnaire de Message 52. Le Gestionnaire de Message assure la réception des messages et l'extraction de leur contenu (détection des sauts de paragraphe et extraction des aspects, extraction du code en bas du message, éventuellement décryptage du code si celui-ci est crypté, extraction de l'adresse de l'émetteur, extraction du champ objet du message, etc.). Le Gestionnaire de Message transmet les informations extraites au Gestionnaire de Processus qui en assure l'analyse, attribue les identifiants nécessaires et conduit les actions liées, notamment la génération du contenu de nouveaux messages et l'envoi d'informations au site web interactif 53. Pour la génération de messages, le contenu des messages (champs "objet" du message, corps du message, adresse de destinataire, etc.) ainsi que le contenu des liens à insérer dans les messages sont définis par le Gestionnaire de Processus. La mise en forme proprement dite des messages, à savoir l'insertion des informations dans les différentes parties des messages, la formation et l'insertion des liens, de l'adresse de destinataire, le cryptage des données, est assurée par le Gestionnaire de Message, ainsi que l'envoi des messages. Il sera noté que le Gestionnaire de Message est considéré ici comme une entité unique, dans un souci de simplicité. En pratique, l'implémentation du Gestionnaire de Message peut nécessiter de prévoir deux entités, l'une s'occupant de générer et d'envoyer des messages, l'autre de recevoir et d'analyser des messages, ces deux opérations correspondant à des processus différents.

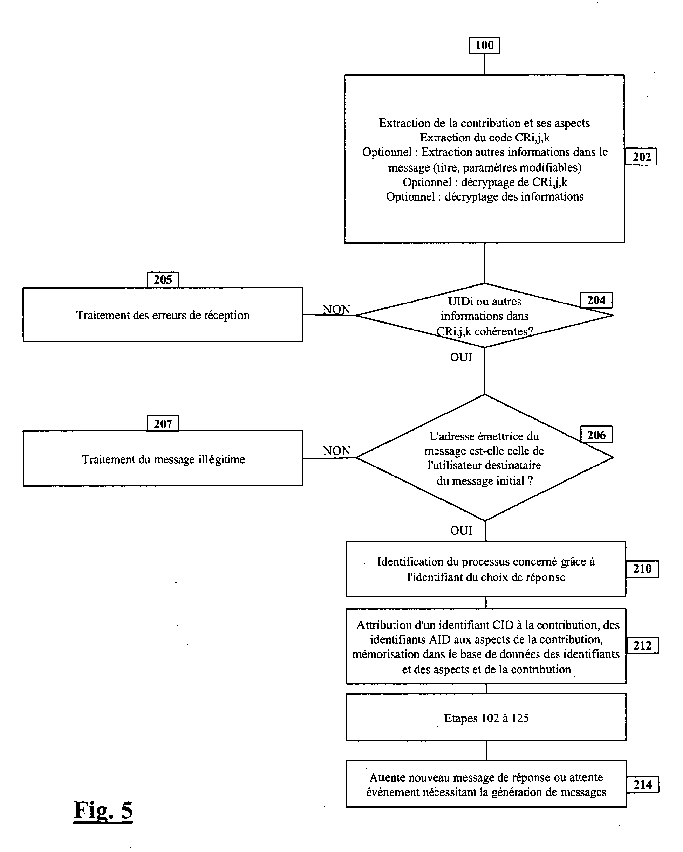

La génération de messages est initiée sur réception d'un message de contribution comprenant un ou plusieurs aspects (étape 100). La réception de ce message déclenche en premier lieu des étapes d'analyse et de traitement 202 à 212 qui seront décrites plus loin en relation avec la figure 5. On suppose ici que ces étapes d'analyse et de traitement ont été effectués et que Gestionnaire de Processus a à sa disposition l'identifiant de la contribution (CID), les identifiants des aspects de la contribution (AID), éventuellement l'identifiant (LG) de la langue de la contribution.

Le Gestionnaire de Processus détermine alors le premier utilisateur Ui à solliciter dans la liste des utilisateurs membres du processus (étape 102). De façon générale, et sauf exception à prévoir dans certains types de processus, tous les utilisateurs membres du processus sont à solliciter. Chaque utilisateur est désigné par son identifiant UID auquel est associé une adresse de messagerie.

Le Gestionnaire de Processus demande ensuite au Gestionnaire de Message de créer un message à destination de l'utilisateur courant Ui (étape 104), ce message comprenant tous les aspects de la contribution reçue. Le Gestionnaire de Processus sélectionne ensuite le premier aspect Aj de la contribution (étape 106) et détermine le premier choix courant Ck à proposer à l'utilisateur pour cet aspect (étape 108). Comme le modèle fonctionnel choisi ici à titre d'exemple prévoit quatre types de choix par aspect d'une contribution ("confirmer", "infirmer", "répondre" ou "proposer") le Gestionnaire de Processus choisit le premier choix ("confirmer) et demande au Gestionnaire de Message de créer un lien de réponse correspondant Li,j,k (étape 110). Puis le Gestionnaire de Message configure le lien (étape 112) en déterminant son contenu et en le communiquant au Gestionnaire de Message, ce dernier l'insérant ensuite dans le message (étape 114). Le Gestionnaire de Processus détermine ensuite si un autre choix de réponse est possible (étape 116) et dans l'affirmative retourne à l'étape 110 en passant par une étape 117 où il sélectionne le choix courant suivant C(k+1) (par exemple "infirmer").

Le Gestionnaire de Processus et le Gestionnaire de Message exécutent cette boucle de génération de liens jusqu'à ce que tous les choix de réponse prévus par le modèle fonctionnel du processus soient épuisés. Le Gestionnaire de Processus détermine ensuite si la contribution reçue comporte un autre aspect (étape 118) et, dans l'affirmative, sélectionne l'aspect suivant A(j+1) (étape 119) et retourne à l'étape 108 pour exécuter de nouveau la boucle de génération de liens.

Lorsque tous les liens de réponse relatifs à tous les aspects de la contribution sont générés et insérés dans le message, le Gestionnaire de Processus demande au Gestionnaire de Message de générer des liens d'expression de niveau d'adhésion, ici quatre liens "en désaccord", "plutôt en désaccord", "plutôt d'accord" ou "d'accord", et de les insérer dans le message (étape 120). Le Gestionnaire de Message envoie ensuite le message à l'utilisateur courant (étape 122).

Le Gestionnaire de Processus détermine ensuite s'il existe un autre utilisateur dans la liste des membres du processus (étape 124) et, dans l'affirmative, sélectionne l'utilisateur courant suivant U(i+1) et retourne à l'étape 104 pour générer un message à l'attention de cet utilisateur ainsi que tous les liens de réponse associés. La boucle de génération de messages se termine lorsque des messages ont été envoyés à tous les utilisateurs. Le Gestionnaire de Processus va alors à une étape 214 représentée en figure 5, où il attend un nouveau message de réponse ou un événement nécessitant la génération de messages (par exemple une demande d'initialisation d'un nouveau processus émise par le site web 53).

Il sera noté qu'un organigramme quasi-similaire peut être prévu pour la génération du premier message de sollicitation après initialisation du processus par l'utilisateur initiateur. Dans ce cas, l'étape 100 n'est pas la réception d'un message mais la réception d'une demande de création de processus, envoyée par le site web (Cf. fig. 2) ou reçue sous forme de message. L'étape 120 est supprimée s'il n'est pas souhaité d'insérer des liens d'expression de niveau d'adhésion dans le premier message de sollicitation du processus.

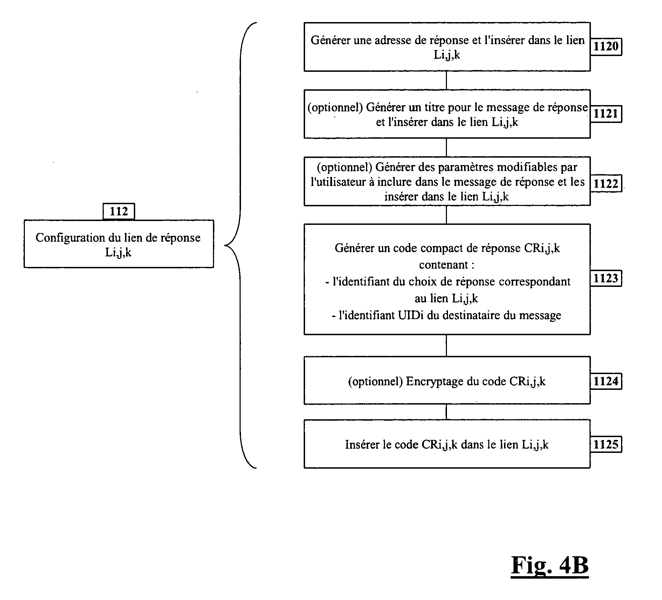

L'organigramme représenté en figure 4B représente des sous-étapes de l'étape 112, visant la configuration d'un lien de réponse Li,j,k. Pour une meilleure compréhension de ces étapes, le lien suivant sera considéré en tant qu'exemple :
MALTO:server@sever.com?body= Adhésion= *xxx* %0A<-Donnez un sujet à votre mail, il constituera le titre de la contrubution->%0A<-Placez votre message ici->%0A%0A%0A%0A%0A%0A%0A%0A%0A%0A%0A%0A%0A%0A%0A%0A<-Ne pas effacer ce qui suit->%0A-BEGIN-UID=*xxx*;TYPE=0;CNATURE=*x*; CID=*xxx*;AID=xxx;LG=FR-END-

Le Gestionnaire de Processus détermine d'abord l'adresse de réponse qui doit apparaître dans le message généré par le lien (ici "server@server.com") et demande au Gestionnaire de Message de l'insérer dans le lien (étape 1120). Optionnellement, le Gestionnaire de Processus peut générer un titre (objet du message) et le fournir au Gestionnaire de Message pour qu'il l'insère dans le lien (étape 1121) en le faisant précéder de la commande "subject" (cette étape n'est pas mise en oeuvre pour générer de lien ci-dessus, qui ne comporte pas la commande "subject" et ne comporte que la commande "body").

Le Gestionnaire de Processus génère ensuite des paramètres modifiables par l'utilisateur (i.e. des paramètres en clair) et le Gestionnaire de Message les insère dans le lien (étape 1123). Cette étape, optionnelle, permet d'insérer dans le message de réponse une valeur d'adhésion ainsi que certaines mentions qui peuvent aider l'utilisateur. Dans l'exemple de lien ci-dessus, il s'agit des mentions suivantes, séparées par des sauts de paragraphes (commande "%0A") :
Adhésion= *xxx*
<-Donnez un sujet à votre mail, il constituera le titre de la contribution->
<-Placez votre message ici->
<-Ne pas effacer ce qui suit->

Le Gestionnaire de Processus génère ensuite un code compact de réponse CRi,j,k (étape 1123) comprenant un identifiant du choix de réponse et l'identifiant UID du destinataire du message. L'identifiant du choix de réponse comprend ici les identifiants TYPE et CNATURE, les identifiants CID, et AID du contexte de la contribution, et éventuellement l'identifiant LG de la langue de la contribution, ainsi que l'identifiant UID de l'utilisateur destinataire du message, soit ici le code suivant :
UID=*xxx*;TYPE=0;CNATURE=*x*; CID=*xxx*;AID=xxx; LG=FR

Une fois le code généré, le Gestionnaire de Processus le fournit au Gestionnaire de Message qui peut optionnellement le crypter (étape 1124) avant de l'insérer dans le lien Li,j,k (étape 1125).

### Traitement des messages reçus

L'organigramme représenté en figure 5 représente des étapes de traitement d'un message de contribution reçu à l'étape 100 (fig. 4A), ces étapes permettant notamment d'extraire les aspects de la contribution et de leur attribuer un identifiant.

Au cours d'une étape 202, le Gestionnaire de Message extrait les éléments utiles du message à savoir contribution et ses aspects, le code CRi,j,k, et le cas échéant d'autres informations utiles tels le titre du message et le niveau d'adhésion (paramètres modifiables). Le Gestionnaire de Message décrypte le code CRi,j,k si celui-ci est crypté puis fournit ces divers éléments au Gestionnaire de Processus. Si d'autres informations sont cryptées, le Gestionnaire de Message les décrypte également.

Au cours d'une étape 204, le Gestionnaire de Processus vérifie que les informations reçues sont cohérentes, notamment l'identifiant UIDi (identifiant de l'utilisateur qui était destinataire du message initial auquel le présent message répond), les identifiants CID, AID, TYPE, CNATURE, LG. Ces identifiants ne sont pas cohérents s'ils ne sont pas lisibles ou si les identifiants UIDi, CID, AID ne correspondent pas à des valeurs présentes dans la base de données du processus. En cas d'incohérence, le Gestionnaire de Processus va à une étape 205 prévue pour le traitement des erreurs de réception. Cette étape peut par exemple comprendre le renvoi de la sollicitation au destinataire initial (si l'identifiant UIDi est cohérent) ou l'envoi à ce dernier d'un message lui demande de répondre de nouveau au message de sollicitation.

Si les identifiants sont cohérents, le Gestionnaire de Processus vérifie au cours d'une étape 206 que l'adresse de l'expéditeur du message de contribution correspond à l'identifiant UIDi présent dans le code CRi,j,k. En cas de non correspondance, le Gestionnaire de Processus va à une étape 207 de traitement du message "illégitime" pour prendre une décision. La décision à prendre en un tel cas dépend notamment du mode de gestion du processus collaboratif et de décisions au plan commercial et peut consister à :
i) ne pas tenir compte du message,
ii) intégrer automatiquement le nouvel utilisateur dans le processus collaboratif et informer les autres utilisateurs de la présence de ce nouvel utilisateur,
iii) renvoyer le message au destinataire d'origine en lui indiquant qu'il n'a pas répondu lui-même au message de sollicitation et que la réponse ne peut être acceptée,
iv) envoyer un message à l'utilisateur initiateur du processus pour lui indiquer qu'un nouvel utilisateur est entré dans le processus collaboratif,
v) déclencher une procédure d'admission ou de rejet du nouvel utilisateur, etc.

Plusieurs décisions peuvent être concomitantes si elles ne sont pas contradictoires. Ainsi les décisions ii), iii) et iv) pourraient être mises en oeuvre simultanément. La procédure d'admission v) peut comprendre l'envoi d'un message d'information à l'utilisateur initiateur du processus, un tel message comprenant des liens de réponse visant l'acceptation ou le rejet du nouvel utilisateur.

Si l'adresse émettrice du message est celle du destinataire du message initial, ou si le nouvel utilisateur est admis dans le processus (dans ce cas un identifiant UID' est attribué au nouvel utilisateur et cet identifiant remplace l'identifiant UID présent dans le code reçu, pour la suite du traitement), un identifiant CID est attribué à la contribution reçue et des identifiants AID sont attribués aux aspects de la contribution. Comme indiqué plus haut, le Gestionnaire de Processus enregistre ensuite l'identifiant CID dans sa base de données, ainsi que l'identifiant UID (ou UID') de l'utilisateur ayant répondu, les identifiants TYPE et CNATURE qui définissent le type et la nature de sa contribution, le niveau d'adhésion mentionné dans la contribution (le cas échéant) et le contenu des aspects de la contribution ainsi que leurs identifiants respectifs AID.

Le Gestionnaire de Processus exécute ensuite les étapes 102 à 125 précédemment décrites (figure 4A) pour transmettre la contribution aux autres utilisateurs sous forme de messages de sollicitation, puis va à l'étape 214 où il attend un nouveau message de réponse ou un événement nécessitant la génération de messages (par exemple une demande d'initialisation d'un nouveau processus envoyée par le site web 53).

### Variantes de réalisation du procédé selon l'invention et domaines d'application

Il apparaitra clairement à l'homme de l'art que le procédé selon l'invention est susceptible de diverses variantes de réalisation. Notamment bien que l'on ait décrit dans ce qui précède un code compact comprenant à la fois l'identifiant UID et l'identifiant du choix de réponse (ici TYPE;CNATURE;CID;AID;LG) ces éléments peuvent être agencés différemment. Par exemple, l'identifiant UID pourrait être placé dans les liens de réponse après la commande "subject" pour se retrouver ensuite dans le champ "objet" du message généré par les liens, tandis que l'identifiant du choix de réponse serait laissé dans le corps du message. Comme évoqué plus haut, tout ou partie de ces identifiants peut également être placée dans les liens de réponse de manière à se retrouver, dans les messages générés par ces liens, dans un champ d'en-tête invisible pour l'utilisateur.

Egalement, l'insertion de l'identifiant UID dans les liens permet de réaliser l'étape de contrôle 206 en figure 5 mais des liens dépourvus de l'identifiant UID pourraient également être prévus dans le cadre d'un processus collaboratif ouvert où il n'est pas souhaité de mettre en oeuvre l'étape 207.

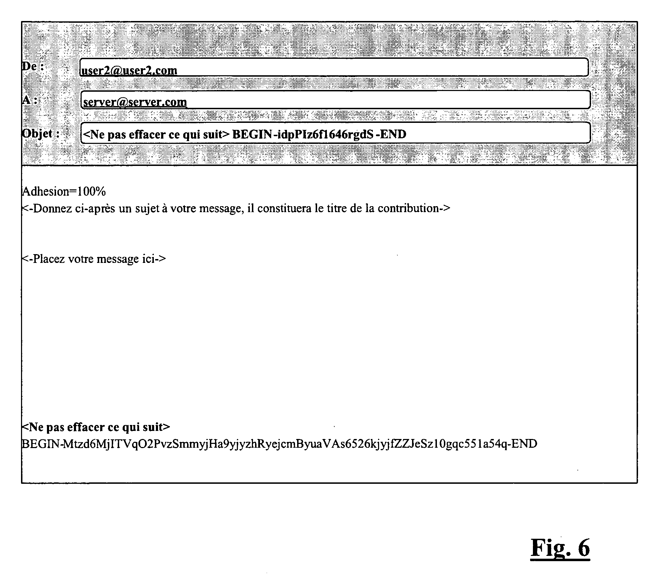

La figure 6 illustre une variante du message représenté en figure 3B dans laquelle l'identifiant UID est placé sous forme cryptée dans le champ "objet" du message tandis que l'identifiant du choix de réponse est placé, également sous forme cryptée, dans le corps du message.

Par ailleurs, le procédé selon l'invention peut être mis en oeuvre avec tout système de messagerie prévoyant des liens générateurs de messages permettant de configurer le contenu des messages générés. Tout logiciel de messagerie par e-mail conforme aux standards de l'industrie (SMTP, POP3, IMAP, HTML, MHTML) peut être utilisé pour contribuer à un processus collaboratif. Le procédé selon l'invention est également applicable aux systèmes de messagerie instantanée, et au système de messagerie SMS pour téléphones mobiles, etc., par exemple :
- pour les e-mails, les standards RFC822,RFC2646,RFC2368, RFC2110-2111, RFC2854, RFC2045-2047, RFC 1738,
- pour la messagerie instantanée, les standards RFC4470, RFC3921, RFC2779, Jabber, Irc, Icq, Msn, Aim, Yahoo,
- pour la messagerie sur téléphone mobile, les standards CDMA, EDGE, GPRS, GSM, UMTS, I-MODE/C-HTML, MMS, SMS, WAP/WML.

Les liens mis utilisés par le procédé sont ainsi compatibles avec les principaux dispositifs de messagerie du marché (Microsoft Outlook, Lotus Notes, Mozilla, Thunderbird, Apple Mail, RIM, Blackberry, Evolution, Kmail, Yahoo! mail, Gmail, Hotmail, Téléphones portables GSM, etc.).

Le procédé selon l'invention peut également être utilisé au sein de tout autre système de messagerie permettant d'insérer dans des messages des liens de réponse permettant de créer de nouveaux messages dont le destinataire et une partie du contenu sont prédéfinis dans le lien de réponse.

Si le système de messagerie des utilisateurs le permet, l'action consistant à générer une contribution peut être conduite lorsqu'aucune connectivité n'est disponible entre l'appareil de l'utilisateur (ordinateur, téléphone, assistant personnel de type PDA...) et le système informatique qui gère le processus collaboratif. Dans un tel cas, la contribution est générée "offline" et est conservée par le logiciel de messagerie de l'utilisateur jusqu'à ce que la connectivité soit rétablie et permette de l'envoyer au système informatique.

Le procédé selon l'invention est également susceptible de diverses applications. Le modèle conceptuel, le modèle fonctionnel, le modèle de codification du processus et la structure des liens de réponse peuvent être adaptés à l'application visée. Pour fixer les idées, on décrira dans ce qui suit un exemple d'application à un processus collaboratif visant le choix d'une date de réunion.

Enfin, le procédé selon l'invention peut inclure la gestion de pièces jointes, et l'insertion dans les messages de liens pointant vers une pièce jointe fournie par un utilisateur, comme cela apparaitra dans l'exemple décrit ci-après.

### Autre exemple d'application : choix d'une date de réunion

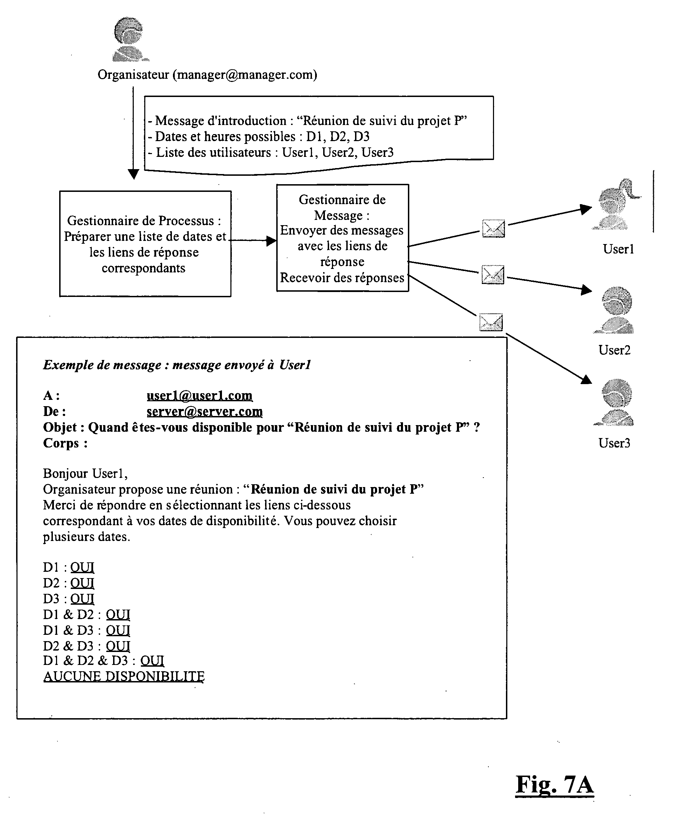

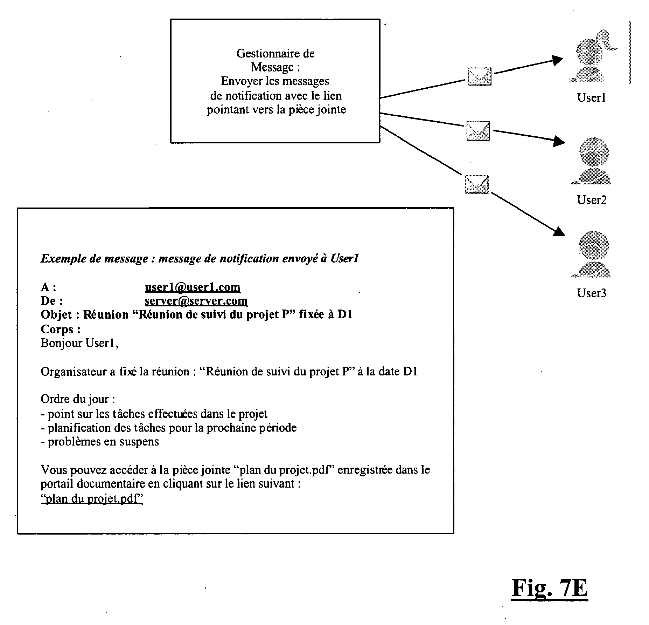

Les figures 7A à 7E illustrent un processus collaboratif visant le choix d'une date de réunion, le serveur de processus collaboratif 50 étant configuré pour gérer ce type de processus.

Sur la figure 7A, un organisateur de réunion (manager@manager.com) se connecte au serveur 50 via le site web 53 pour initier le processus. L'organisateur apporte la contribution initiale suivante au serveur :
- Message d'introduction "Réunion de suivi du projet P"
- Dates et heures possibles D1, D2, D3
- Utilisateurs visés : User1, User2, User3

Le Gestionnaire de Processus prépare alors une liste de dates comprenant les dates D1, D2, D3 et définit le contenu de liens de réponse correspondants. Il adresse au Gestionnaire de Message le contenu d'un message à destination des utilisateurs visés, ainsi que le contenu des liens de réponse. Le Gestionnaire de Message envoie le message aux utilisateurs désignés, en y insérant les liens de réponse.

### Exemple de message (message envoyé ici à User1) :

**A : user1@user1.com**
**De : servez@server.com**
**Objet :** Quand **êtes-vous disponible** pour **"Réunion** de suivi **du** projet **P" ?**
Corps :
   Bonjour User1,
      Organisateur propose une réunion : "Réunion de suivi du projet P"
      Merci de répondre en sélectionnant les liens ci-dessous correspondant à vos dates de disponibilité. Vous pouvez choisir plusieurs dates.
D1 : OUI
D2 : OUI
D3 : OUI
D1 & D2 : OUI
D1 & D3 : OUI
D2 & D3 : OUI
D1 & D2 & D3 : OUI

### AUCUNE DISPONIBILITE

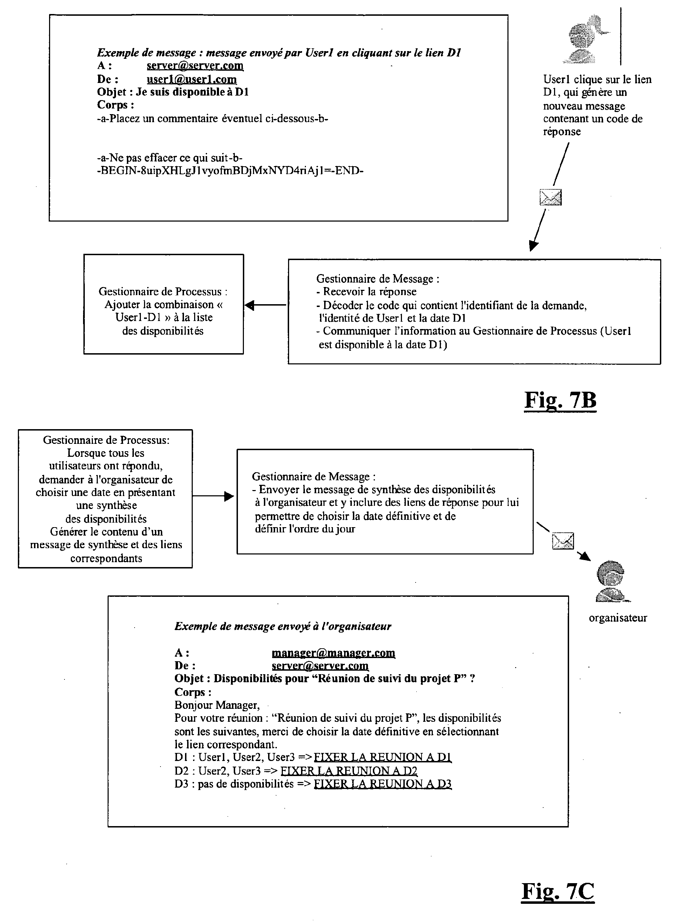

Sur la figure 7B, l'utilisateur "User1" a reçu le message et a sélectionné le lien D1 (c'est-à-dire a cliqué sur le lien "OUI" en face de la date D1). Ce lien génère un message de réponse contenant un code de réponse, par exemple le message suivant :
**A : server@server.com**
**De : user1@user1.com**
**Objet : Je suis disponible à D1**
**Corps :**
   -a-Placez un commentaire éventuel ci-dessous-b-
-a-Ne pas effacer ce qui suit-b-
-BEGIN-8uipXHLgJ1vyofmBDjMxNyD4riAj1=-END-

Le message de réponse est envoyé au serveur 50. Le Gestionnaire de Message le reçoit et décrypte le code présent en bas de l'email, qui contient l'identifiant de la demande, l'identité de User1 et la date D1. Il communique au Gestionnaire de Processus cette information, qui signifie "User1 est disponible à la date D1". Le Gestionnaire de Processus ajoute alors la combinaison "User1-D1" à la liste des disponibilités.

Sur la figure 7C, on suppose que tous les utilisateurs ont répondu. Le Gestionnaire de Processus demande alors à l'organisateur de la réunion de choisir une date en lui présentant la synthèse des disponibilités. A cet effet, il génère le contenu d'un message de synthèse ainsi que le contenu de liens de réponse correspondants aux disponibilités reçues. Le Gestionnaire de Message génère le message et l'envoie à l'organisateur de la réunion en y incluant les liens qui permettre à l'organisateur de choisir la date définitive de la réunion et de définir l'ordre du jour.

### Exemple de message envoyé à l'organisateur :

**A : manager@manager.com**
De : **server@server.com**
**Objet : Disponibilités** pour **"Réunion** de suivi du projet P" ?
**Corps :**
   Bonjour Manager,
      Pour votre réunion : "Réunion de suivi du projet P", les disponibilités sont les suivantes, merci de choisir la date définitive en sélectionnant le lien correspondant.
D1 : User1, User2, User3 => FIXER LA REUNION A D1
D2 : User2, User3 => FIXER LA REUNION A D2
D3 : pas de disponibilités => FIXER LA REUNION A D3

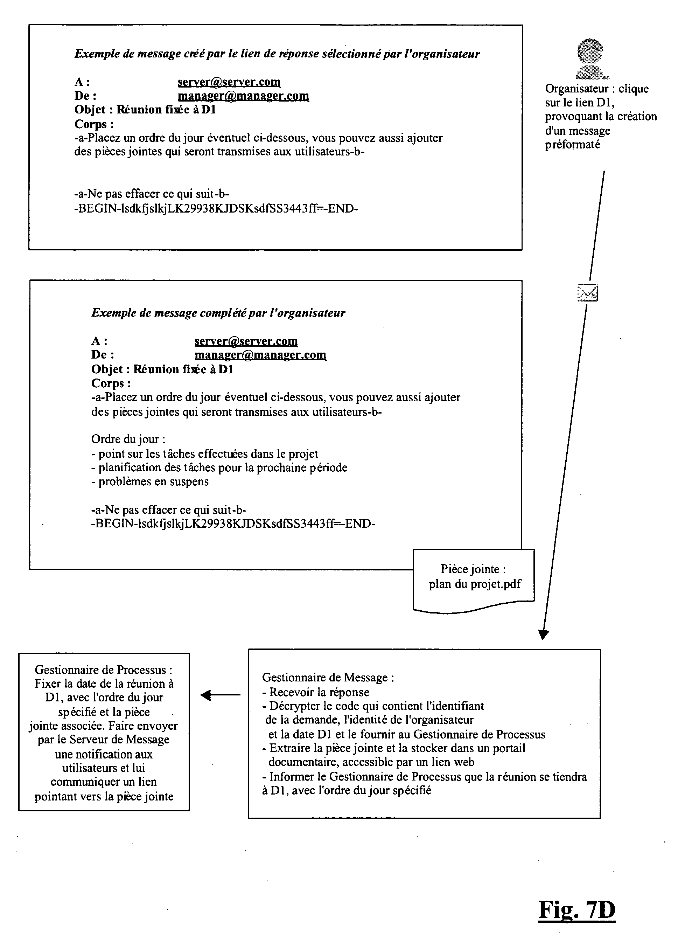

Sur la figure 7D, l'organisateur a cliqué sur le lien D1, provoquant ainsi la création d'un message préconfiguré, par exemple le message suivant :
**A : server@server.com**
**De : manager@manager.com**
**Objet : Réunion fixée à D1**
**Corps :**
   -a-Placez un ordre du jour éventuel ci-dessous, vous pouvez aussi ajouter des pièces jointes qui seront transmises aux utilisateurs-b-
-a-Ne pas effacer ce qui suit-b-
-BEGIN-lsdkfjslkjLK29938KJDSKsdfSS3443ff=-END-

L'organisateur complète le message, par exemple de la façon indiquée ci-après, et y insère en outre une pièce jointe "plan du projet.pdf" :
**A : server@server.com**
**De : manager@manager.com**
**Objet : Réunion fixée à D1**
**Corps :**
   -a-Placez un ordre du jour éventuel ci-dessous, vous pouvez aussi ajouter des pièces jointes qui seront transmises aux utilisateurs-b-
Ordre du jour :
   - point sur les tâches effectuées dans le projet
   - planification des tâches pour la prochaine période
   - problèmes en suspens
-a-Ne pas effacer ce qui suit-b-
-BEGIN-lsdkfjslkjLK29938KJDSKsdfSS3443ff=-END-
+ pièce jointe : plan du projet.pdf

L'organisateur envoie ce message de réponse au serveur. Le Gestionnaire de Message décrypte le code qui contient l'identifiant de la demande, l'identité de l'organisateur et la date D1 et le fournit au Gestionnaire de Processus. Il extrait également la pièce jointe et la stocke dans un portail documentaire. Enfin, il informe le Gestionnaire de Processus que la réunion se tiendra à D1, avec l'ordre du jour spécifié.

De son côté, le Gestionnaire de Processus fixe la date de la réunion à D1, avec l'ordre du jour spécifié et la pièce jointe associée. Il demande au Gestionnaire de Message d'envoyer un message de notification aux utilisateurs comprenant un lien pointant vers la pièce jointe.

Ainsi, sur la figure 7A, le Gestionnaire de Message envoie aux utilisateurs un message de notification comportant le lien pointant vers la pièce jointe. Ce message est par exemple configuré comme suit :
**A : user1@user1.com**
**De : server@server.com**
**Objet : Réunion "Réunion de suivi du projet P" fixée** à **D1**
**Corps :**
   Bonjour User1,
      Organisateur a fixé la réunion : "Réunion de suivi du projet P" à la date D1
Ordre du jour :
   - point sur les tâches effectuées dans le projet
   - planification des tâches pour la prochaine période
   - problèmes en suspens
Vous pouvez accéder à la pièce jointe "plan du projet.pdf" enregistrée dans le portail documentaire en cliquant sur le lien suivant :
"plan du projet.pdf" dans le portail documentaire

A la lumière des exemples décrits, il est à la portée de l'homme de l'art de définir d'autres modèles conceptuels, fonctionnels et de codification d'un processus collaboratif, selon la nature du processus et l'application qu'il couvre, ainsi que de définir diverses structures de liens de réponse, tout en restant dans le cadre de l'invention telle que définie par les revendications.

## Revendications

1. Procédé de gestion automatisée au moyen d'un système informatique (50, 51, 52) d'un processus collaboratif comprenant une succession d'états mémorisés dans une mémoire du système informatique, le procédé comprenant des étapes d'envoi par le système informatique de messages électroniques à des utilisateurs membres du processus collaboratif et de réception par le système informatique de messages de réponse émis par des utilisateurs, lesdites étapes d'envoi et de réception comprenant les étapes suivantes exécutées par le système informatique :
- recevoir un premier message d'un premier utilisateur,
- générer (104) un second message (fig. 3D, fig. 7B),
- insérer (104) dans le second message une information prélevée dans le premier message,
caractérisé en ce l'étape de génération du second message comprend en outre les étapes consistant à :
- insérer (110, 112, 114) dans le second message, en relation avec tout ou partie de l'information prélevée dans le premier message, au moins un lien de sélection d'un choix de réponse au message,
- insérer (1120-1125) dans le lien l'adresse de réponse
du système informatique, et au moins un premier identifiant pour identifier un choix de réponse correspondant au lien et un état du processus collaboratif dans le contexte duquel s'inscrit la génération du second message,
- envoyer le second message à au moins un second utilisateur, le lien étant configuré pour générer directement un message de réponse (fig. 3E, fig. 7D) contenant le premier identifiant lorsqu'il est sélectionné par un utilisateur ayant reçu le message.

2. Procédé selon la revendication 1, comprenant l'étape consistant à insérer dans le lien un second identifiant prévu pour identifier le second utilisateur en tant que destinataire du second message, le lien étant configuré pour générer directement un message de réponse contenant le premier et le second identifiants lorsqu'il est sélectionné par le second utilisateur.

3. Procédé selon la revendication 2, comprenant une étape consistant à configurer le lien de manière que le premier et le second identifiants se trouvent placés dans l'une des parties suivantes du message de réponse pouvant être généré par le lien : un champ objet du message ; un corps du message (fig. 3B) ; un champ d'en-tête du message (fig. 6).

4. Procédé selon l'une des revendications 2 et 3, comprenant une étape consistant à crypter au moins le second identifiant avant de l'insérer dans le lien.

5. Procédé selon l'une des revendications 1 à 4, comprenant une étape consistant à inclure dans le premier identifiant au moins un identifiant prévu pour identifier l'état du processus collaboratif dans lequel s'inscrit la génération du second message.

6. Procédé selon l'une des revendications 1 à 5, comprenant une étape consistant à inclure dans le premier identifiant au moins un identifiant prévu pour caractériser un type ou une nature du choix de réponse correspondant au lien.

7. Procédé selon l'une des revendications 1 à 6, comprenant une étape consistant à insérer également dans le lien un identifiant du langage du processus collaboratif dans lequel s'inscrit la génération du second message.

8. Procédé selon l'une des revendications 1 à 7, comprenant une étape consistant à mémoriser dans une table de correspondance une relation entre le premier identifiant et un état du processus collaboratif dans le contexte duquel le second message est généré.

9. Procédé selon l'une des revendications 1 à 7, comprenant une étape consistant à mémoriser dans une table de correspondance une relation entre le premier identifiant et l'identité du destinataire du second message.

10. Procédé selon l'une des revendications 1 à 9, comprenant les étapes consistant à :
- recevoir (100) un message de réponse généré par le lien,
- extraire (202) le premier identifiant du message de réponse,
- extraire (202) du message de réponse une nouvelle information écrite par l'utilisateur ayant envoyé le message de réponse,
- attribuer (212) à la nouvelle information extraite un ou plusieurs identifiants et mémoriser la nouvelle information et le ou les identifiants associés à l'information.

11. Procédé selon l'une des revendications 1 à 9, comprenant les étapes consistant à :
- recevoir (100) un message de réponse généré par le lien,
- extraire (202) du message de réponse une nouvelle information écrite par l'utilisateur ayant envoyé le message de réponse,
- rechercher un symbole séparateur au sein de la nouvelle information (202),
- morceler (202) la nouvelle information en plusieurs aspects, grâce au symbole séparateur,
- attribuer (212) un identifiant à chaque aspect, et
- mémoriser (212) les aspects ainsi que l'identifiant associé à chaque aspect.

12. Procédé selon la revendication 2, comprenant les étapes consistant à :
- recevoir (100) un message de réponse généré par le lien,
- extraire (202) le second identifiant du message de réponse,
- identifier le destinataire du message initial grâce au second identifiant,
- vérifier (206) qu'il existe une concordance entre l'adresse émettrice du message de réponse et le destinataire du message initial, et, dans la négative, engager (207) une action conduisant à l'acceptation ou au rejet de l'adresse émettrice du message de réponse en tant que membre du processus collaboratif.

13. Procédé selon l'une des revendications 1 à 12, comprenant les étapes consistant à :
- recevoir le premier message au moyen d'un logiciel de messagerie,
- sélectionner le lien pour que le logiciel de messagerie génère directement un message de réponse contenant le premier identifiant, et
- envoyer le message.

14. Système informatique (50) de gestion d'un processus collaboratif, **caractérisé en ce qu'**il est configuré pour mettre en oeuvre le procédé selon l'une des revendications 1 à 13, **en ce qu'**il comprend un gestionnaire de message (52) configuré pour générer et envoyer à des utilisateurs membres du processus collaboratif des messages électroniques contenant des liens générateur de messages de réponse incluant au moins le premier identifiant, et **en ce qu'**il est configuré pour :
- recevoir un message électronique contenant une pièce jointe,
- enregistrer la pièce jointe,
- envoyer à des utilisateurs membres du processus collaboratif un message contenant un lien pointant vers la pièce jointe enregistrée.

15. Système selon la revendication 14, dans lequel le gestionnaire de message est configuré pour insérer dans des messages des liens générateurs de messages compatibles avec une infrastructure de messagerie électronique basée sur des standards de messagerie électronique, de messagerie instantanée ou de messagerie sur téléphone mobile.

## Patentansprüche

1. Verfahren zur automatisierten Verwaltung eines kollaborativen eine Reihenfolge in einem Speicher des Computersystems gespeicherter Zustände umfassenden Prozesses anhand eines Computersystems (50, 51, 52), das Verfahren umfassend Schritte des Sendens von elektronischen Nachrichten an am kollaborativen Prozess teilnehmende Benutzer durch das Computersystem und des Empfangs von von Benutzern gesendeten Antwortnachrichten durch das Computersystem, wobei die Sende- und Empfangsschritte die folgenden vom Computersystem ausgeführten Schritte umfassen, die darin bestehen:
- eine erste Nachricht von einem ersten Benutzer zu empfangen,
- eine zweite Nachricht (Fig. 3D, Fig. 7B) zu generieren (104),
- eine aus der ersten Nachricht entnommene Information in die zweite Nachricht einzufügen (104),
**dadurch gekennzeichnet, dass** der Schritt des Generierens der zweiten Nachricht auch die Schritte umfasst, die darin bestehen:
- wenigstens einen Link zum Auswählen einer Nachrichtantwortwahl in die zweite Nachricht in Beziehung zu der Gesamtheit oder einem Teil der aus der ersten Nachricht entnommenen Information einzufügen (110, 112, 114),
- die Antwortadresse des Computersystems und wenigstens einen ersten Identifizierer zum Identifizieren einer dem Link entsprechenden Antwortwahl und eines Zustands des kollaborativen Prozesses, in dessen Rahmen das Generieren der zweiten Nachricht erfolgt, in den Link einzufügen (1120-1125),
- die zweite Nachricht an wenigstens einen zweiten Benutzer zu senden,
wobei der Link konfiguriert ist, um eine den ersten Identifizierer enthaltende Antwortnachricht (Fig. 3E, Fig. 7D) unmittelbar zu generieren, wenn er von einem Benutzer ausgewählt wird, der die Nachricht empfangen hat.

2. Verfahren nach Anspruch 1, umfassend den Schritt, der darin besteht, in den Link einen zweiten Identifizierer einzufügen, der dafür vorgesehen ist, den zweiten Benutzer als Empfänger der zweiten Nachricht zu identifizieren, wobei der Link konfiguriert ist, um eine den ersten und den zweiten Identifizierer enthaltende Antwortnachricht unmittelbar zu generieren, wenn er von dem zweiten Benutzer ausgewählt wird.

3. Verfahren nach Anspruch 2, umfassend einen Schritt, der darin besteht, den Link so zu konfigurieren, dass der erste und der zweite Identifizierer sich in einer der folgenden Teile der vom Link generierbaren Antwortnachricht befinden: einem Betreff-Feld der Nachricht; einem Hauptteil der Nachricht (Fig. 3B); einem Header-Feld der Nachricht (Fig. 6).

4. Verfahren nach einem der Ansprüche 2 und 3, umfassend einen Schritt, der darin besteht, wenigstens den zweiten Identifizierer zu verschlüsseln, bevor er in den Link eingefügt wird.

5. Verfahren nach einem der Ansprüche 1 bis 4, umfassend einen Schritt, der darin besteht, in den ersten Identifizierer wenigstens einen Identifizierer einzuschließen, der dafür vorgesehen ist, den Zustand des kollaborativen Prozesses, in dem das Generieren der zweiten Nachricht erfolgt, zu identifizieren.

6. Verfahren nach einem der Ansprüche 1 bis 5, umfassend einen Schritt, der darin besteht, in den ersten Identifizierer wenigstens einen Identifizierer einzuschließen, der dafür vorgesehen ist, einen Typ oder eine Art der dem Link entsprechenden Antwortwahl zu kennzeichnen.

7. Verfahren nach einem der Ansprüche 1 bis 6, umfassend einen Schritt, der darin besteht, in den Link ebenfalls einen Identifizierer der Sprache des kollaborativen Prozesses einzufügen, in dem das Generieren der zweiten Nachricht erfolgt.

8. Verfahren nach einem der Ansprüche 1 bis 7, umfassend einen Schritt, der darin besteht, eine Beziehung zwischen dem ersten Identifizierer und einem Zustand des kollaborativen Prozesses, in dessen Rahmen die zweite Nachricht generiert wird, in einer Korrespondenztabelle zu speichern.

9. Verfahren nach einem der Ansprüche 1 bis 7, umfassend einen Schritt, der darin besteht, eine Beziehung zwischen dem ersten Identifizierer und der Identität des Empfängers der zweiten Nachricht in einer Korrespondenztabelle zu speichern.

10. Verfahren nach einem der Ansprüche 1 bis 9, umfassend die Schritte, die darin bestehen:
- eine vom Link generierte Antwortnachricht zu empfangen (100),
- den ersten Identifizierer aus der Antwortnachricht auszulesen (202),
- aus der Antwortnachricht eine neue Information auszulesen (202), die vom Benutzer geschrieben ist, der die Antwortnachricht gesendet hat,
- der neuen ausgelesenen Information einen oder mehrere Identifizierer zuzuweisen (212), und die neue Information und den oder die mit der Information assoziierten Identifizierer zu speichern.

11. Verfahren nach einem der Ansprüche 1 bis 9, umfassend die Schritte, die darin bestehen:
- eine vom Link generierte Antwortnachricht zu empfangen (100),
- aus der Antwortnachricht eine neue Information auszulesen (202), die vom Benutzer geschrieben ist, der die Antwortnachricht gesendet hat,
- ein Trennzeichen innerhalb der neuen Information (202) zu suchen,
- die neue Information anhand des Trennzeichens in mehrere Aspekte zu zerstückeln (202)
- jedem Aspekt einen Identifizierer zuzuweisen (212), und
- die Aspekte sowie den mit jedem Aspekt assoziierten Identifizierer zu speichern (212).

12. Verfahren nach Anspruch 2, umfassend die Schritte, die darin bestehen:
- eine vom Link generierte Antwortnachricht zu empfangen (100),
- den zweiten Identifizierer aus der Antwortnachricht auszulesen (202),
- den Empfänger der ursprünglichen Nachricht anhand des zweiten Identifizierers zu identifizieren,
- eine zwischen der die Antwortnachricht sendenden Adresse und dem Empfänger der ursprünglichen Nachricht bestehende Übereinstimmung zu prüfen (206), und bei Nichtübereinstimmung, eine Aktion einzuleiten (207), die zu der Annahme oder der Zurückweisung der die Antwortnachricht sendenden Adresse als Mitglied des kollaborativen Prozesses führt.

13. Verfahren nach einem der Ansprüche 1 bis 12, umfassend die Schritte, die darin bestehen:
- die erste Nachricht anhand einer Messaging-Software zu empfangen,
- den Link so auszuwählen, dass die Messaging-Software unmittelbar eine den ersten Identifizierer enthaltende Antwortnachricht generiert, und
- die Nachricht zu senden.

14. Computersystem (50) zur Verwaltung eines kollaborativen Prozesses, **dadurch gekennzeichnet, dass** es konfiguriert ist, um das Verfahren nach einem der Ansprüche 1 bis 13 auszuführen, dass es einen Nachrichten-Manager (52) umfasst, der konfiguriert ist, um elektronische Nachrichten, die Antwortnachrichten generierende Links enthalten, die wenigstens den ersten Identifizierer einschließen, zu generieren und sie an am kollaborativen Prozess teilnehmende Benutzer zu senden, und dass es konfiguriert ist, um:
- eine elektronische einen Anhang enthaltende Nachricht zu empfangen,
- den Anhang abzuspeichern,
- an am kollaborativen Prozess teilnehmende Benutzer eine Nachricht zu senden, die einen Link zu dem abgespeicherten Anhang enthält.

15. System nach Anspruch 14, bei dem der Nachrichten-Manager konfiguriert ist, um Nachrichten generierende Links in Nachrichten einzufügen, die mit einer E-Messaging-Infrastruktur kompatibel sind, die auf Standards von E-Messaging, Instant-Messaging oder Mobiltelefon-Messaging basiert.

## Claims

1. An automated management method for managing by means of a computer system (50, 51, 52) a collaborative process comprising a series of states stored in a memory of the computer system, the method comprising steps of sending by the computer system electronic messages to member users of the collaborative process and of receiving by the computer system response messages sent by users, said sending and receiving steps comprising the following steps executed by the computer system:
- receiving a first message from a first user,
- generating (104) a second message (Figure 3D, Figure 7B),
- inserting (104) into the second message an item of information taken from the first message,
**characterized in that** the step of generating the second message further comprises the steps of:
- inserting (110, 112, 114) into the second message, in connection with all or part of the information taken in the first message, at least one link for selecting a choice of response to the message,
- inserting (1120-1125) into the link the response address of the computer system and at least one first identifier to identify a choice of response corresponding to the link and a state of the collaborative process in the context of which the second message is generated,
- sending the second message to at least one second user,
the link being configured to directly generate a response message (Figure 3E, Figure 7D) containing the first identifier when it is selected by a user having received the message.

2. The method according to claim 1, comprising the step of inserting into the link a second identifier provided to identify the second user as addressee of the second message, the link being configured to directly generate a response message containing the first and the second identifiers when it is selected by the second user.

3. The method according to claim 2, comprising a step of configuring the link so that the first and the second identifiers are placed in one of the following parts of the response message that may be generated by the link: a message subject field; a message body (Figure 3B); a message header field (Figure 6).

4. The method according to one of claims 2 and 3, comprising a step of encrypting at least the second identifier before inserting it into the link.

5. The method according to one of claims 1 to 4, comprising a step of including in the first identifier at least one identifier provided to identify the state of the collaborative process in which the second message is generated.

6. The method according to one of claims 1 to 5, comprising a step of including in the first identifier at least one identifier provided to characterize a type or a nature of the choice of response corresponding to the link.

7. The method according to one of claims 1 to 6, comprising a step of also inserting into the link an identifier of the language of the collaborative process in which the second message is generated.

8. The method according to one of claims 1 to 7, comprising a step of storing in a function table a relation between the first identifier and a state of the collaborative process in the context of which the second message is generated.

9. The method according to one of claims 1 to 7, comprising a step of storing in a function table a relation between the first identifier and the identity of the addressee of the second message.

10. The method according to one of claims 1 to 9, comprising the steps of:
- receiving (100) a response message generated by the link,
- extracting (202) the first identifier from the response message,
- extracting (202) from the response message a new item of information written by the user who sent the response message,
- allocating (212) to the new extracted information one or more identifiers and storing the new information and the identifier(s) associated with the information.

11. The method according to one of claims 1 to 9, comprising the steps of:
- receiving (100) a response message generated by the link,
- extracting (202) from the response message a new item of information written by the user who sent the response message,
- searching for a separator symbol in the new information (202),
- splitting (202) the new information into several aspects, thanks to the separator symbol,
- allocating (212) an identifier to each aspect, and
- storing (212) the aspects and the identifier associated with each aspect.

12. The method according to claim 2, comprising the steps of:
- receiving (100) a response message generated by the link,
- extracting (202) the second identifier from the response message,
- identifying the addressee of the initial message thanks to the second identifier,
- checking (206) that there is a concordance between the sending address of the response message and the addressee of the initial message, and, if there is not, initiating (207) an action leading to the acceptance or the refusal of the sending address of the response message as member of the collaborative process.

13. The method according to one of claims 1 to 12, comprising the steps of:
- receiving the first message by means of a messaging software program,
- selecting the link so that the messaging software program directly generates a response message containing the first identifier, and
- sending the message.

14. A computer system (50) for managing a collaborative process, **characterized in that** it is configured to implement the method according to one of claims 1 to 13, **in that** it comprises a message manager (52) configured to generate and send to member users of the collaborative process electronic messages containing links generating response messages including at least the first identifier, and **in that** it is configured to:
- receive an electronic message containing an attachment,
- save the attachment,
- send to member users of the collaborative process a message containing a link to the saved attachment.

15. A system according to claim 14, wherein the message manager is configured to insert into messages links generating messages compatible with an electronic messaging infrastructure based on electronic messaging standards, instant messaging standards or mobile telephone messaging standards.
